# EUROPEAN PATENT APPLICATION

(11) **EP 4 567 994 A1**
(43) Date of publication of application: **11.06.2025**
(21) Application number: 22955317.7
(22) Date of filing: 17.08.2022
(51) Int. Cl.: H01M 50/358, H01M 50/30, H01M 50/383

(54) **DISCHARGE ASSEMBLY, BOX BODY, BATTERY, AND ELECTRICAL DEVICE**

(71) Applicant: Contemporary Amperex Technology (Hong Kong) Limited, Central, Hong Kong (HK)
(72) Inventor: ZHANG, Chenchen, Ningde, Fujian 352100 (CN); JIN, Haizu, Ningde, Fujian 352100 (CN); LI, Xing, Ningde, Fujian 352100 (CN); LI, Zhenhua, Ningde, Fujian 352100 (CN); TANG, Yu, Ningde, Fujian 352100 (CN)
(74) Representative: Ziebig Hengelhaupt Intellectual Property Attorneys Patentanwaltskanzlei PartGmbB
(86) International application number: PCT/CN2022/113157
(87) International publication number: WO 2024/036536

(57) **Abstract**

Provided are a discharge assembly, a casing, a battery, and an electric device. The discharge assembly includes a discharge member and a shield. The discharge member has a discharge cavity. The discharge member has an inlet region formed on a wall surface of the discharge member. The discharge cavity is adapted to receive a discharge from a battery cell through the inlet region. The shield is disposed in the discharge member The shield is adapted to shield the inlet region in a shielding state to at least block flames in the discharge, and adapted to form a communication channel in communication with the inlet region and the discharge cavity to allow a gas in the discharge to enter the discharge cavity.

## Description

### FIELD

The present disclosure relates to the field of battery technologies, and more particularly, to a discharge assembly, a casing, a battery, and an electric device.

### BACKGROUND

In the related art, batteries are applied in a wide range of application scenarios. For example, they can be applied in electric devices such as vehicles, cell phones, portable devices, laptops, ships, spacecraft, electric toys, and electric tools. However, there is a risk of thermal runaway in batteries. Once thermal runaway occurs, a discharge emitted from a cell is prone to cause secondary damage, which aggravates the harm and the scope of impact of thermal runaway.

### SUMMARY

The present disclosure aims to solve at least one of the technical problems in the related art. To this end, the present disclosure provides a discharge assembly, a casing, a battery, and an electric device. The discharge assembly is capable of reducing harm and a scope of impact of thermal runaway.

According to an embodiment in a first aspect of the present disclosure, a discharge assembly is provided. The discharge assembly includes: a discharge member having a discharge cavity, the discharge member having an inlet region formed on a wall surface of the discharge member, and the discharge cavity being adapted to receive a discharge from a battery cell through the inlet region; and a shield disposed in the discharge member, the shield being adapted to shield the inlet region in a shielding state to at least block flames in the discharge, and adapted to form a communication channel in communication with the inlet region and the discharge cavity to allow a gas in the discharge to enter the discharge cavity. With the discharge assembly according to the present disclosure, the shield is disposed in the discharge member to block the flames in the discharge from the battery cell. Therefore, the harm and the scope of impact of thermal runaway can be reduced.

In some embodiments, the discharge member has a first wall surface. The inlet region includes a plurality of first inlet regions formed on the first wall surface. The shield includes a first shield, the first shield being spaced apart from the first wall surface in the shielding state, and an orthographic projection of the first shield on the first wall surface covering the plurality of first inlet regions.

In some embodiments, a plurality of first shields is provided and arranged at intervals. The plurality of first inlet regions is shielded by the plurality of first shields in a one-to-one correspondence.

In some embodiments, at least two adjacent first inlet regions of the plurality of first inlet regions are shielded by one first shield.

In some embodiments, the plurality of first inlet regions is shielded by one first shield.

In some embodiments, a first inlet row is defined by multiple first inlet regions of the plurality of first inlet regions arranged in a length direction of the discharge member, the multiple first inlet regions in the first inlet row being shielded by one first shield.

In some embodiments, a plurality of first inlet rows is defined on the first wall surface and arranged in a height direction of the discharge member. The first shields corresponding to the plurality of first inlet rows are arranged at intervals in the height direction of the discharge member.

In some embodiments, a first inlet column is defined by multiple first inlet regions of the plurality of first inlet regions arranged in a height direction of the discharge member, the multiple first inlet regions in the first inlet column being shielded by one first shield.

In some embodiments, a plurality of first inlet columns is defined on the first wall surface and arranged in a length direction of the discharge member. The first shields corresponding to the plurality of first inlet columns are arranged at intervals in the length direction of the discharge member.

In some embodiments, the first shield has a first through hole. An orthographic projection of the first through hole on the first wall surface is offset from the first inlet region.

In some embodiments, the discharge member has a second wall surface. The inlet region includes a plurality of second inlet regions formed on the second wall surface. The first shield is spaced apart from the second wall surface in the shielding state, an orthographic projection of the first shield on the second wall surface covering the plurality of second inlet regions.

In some embodiments, the second wall surface and the first wall surface are two opposite side walls of the discharge member. The first shield is located between the first wall surface and the second wall surface.

In some embodiments, the second wall surface and the first wall surface are two side walls of the discharge member in a width direction of the discharge member. The first shield is located at a central position between the first wall surface and the second wall surface.

In some embodiments, the first shield has a first through hole. An orthographic projection of the first through hole on the first wall surface is offset from the first inlet region. An orthographic projection of the first through hole on the second wall surface is offset from the second inlet region.

In some embodiments, the discharge member has a second wall surface. The inlet region includes a plurality of second inlet regions formed on the second wall surface. The shield includes a second shield. The second shield is spaced apart from the second wall surface in the shielding state, an orthographic projection of the second shield on the second wall surface covering the plurality of second inlet regions.

In some embodiments, the second wall surface and the first wall surface are two opposite side walls of the discharge member. The second shield is disposed at a side of the first shield close to the second wall surface.

In some embodiments, the second shield is spaced apart from the first shield, to define at least a part of the discharge cavity between the first shield and the second shield.

In some embodiments, a plurality of second shields is provided and arranged at intervals. The plurality of second inlet regions is shielded by the plurality of second shields in a one-to-one correspondence.

In some embodiments, at least two adjacent second inlet regions of the plurality of second inlet regions are shielded by one second shield.

In some embodiments, the second shield has a second through hole. An orthographic projection of the second through hole on the second wall surface is offset from the second inlet region.

In some embodiments, the first shield has a first through hole. An orthographic projection of the first through hole on the first wall surface is offset from the first inlet region.

In some embodiments, the second wall surface and the first wall surface are two side walls of the discharge member in a width direction of the discharge member. A support beam extending in a length direction of the discharge member is disposed in the discharge member. The first shield is disposed at a side of the support beam facing towards the first wall surface. The second shield is disposed at a side of the support beam facing towards the second wall surface. The support beam has a third through hole.

In some embodiments, a position of at least one shield is fixed.

In some embodiments, a support beam is disposed in the discharge member, the shield being fixedly disposed at the support beam.

In some embodiments, the shield has a shape matching a shape of a wall surface of the support beam at corresponding positions.

In some embodiments, a position or a shape of at least one shield is variable.

In some embodiments, the at least one shield is deformable or movable in a direction of entry of the inlet region corresponding to the at least one shield.

In some embodiments, the discharge assembly further includes: a support member configured to support the shield whose position is variable, the support member being constructed to be meltable at a temperature of the discharge, to enable the position of the shield corresponding to the support member to be variable.

In some embodiments, the at least one shield is movable in a direction in which a plurality of inlet regions on one wall surface is arranged at intervals, to selectively shield different inlet regions.

In some embodiments, the discharge assembly further includes a driver configured to drive the at least one shield that is movable.

In some embodiments, in the shielding state, the shield is spaced apart from the wall surface forming the inlet region, to form the communication channel between the shield and the wall surface, the communication channel being in communication with the discharge cavity at an edge of the shield; and/or the shield has a through hole offset from the inlet region, the communication channel being in communication with the discharge cavity through the through hole.

In some embodiments, the shield is a hollow housing to form the communication channel in the shield. A peripheral side wall of the shield has an opening to enable the communication channel to be in communication with the discharge cavity. The shield is attached to the wall surface forming the inlet region and enables the communication channel to be in communication with the inlet region.

In some embodiments, the shield is a fireproof member.

In some embodiments, the fireproof member is a fireproof plate; or the fireproof member includes a substrate and a fireproof layer disposed outside the substrate.

In some embodiments, the discharge assembly further includes a barrier disposed in the discharge cavity and located between two adjacent inlet regions at one side.

In some embodiments, the discharge assembly is applied in a battery including at least one battery cell.

According to an embodiment in a second aspect of the present disclosure, a casing is provided. The casing has an accommodation cavity configured to accommodate a battery cell and includes the discharge assembly according to the embodiment in the first aspect of the present disclosure. By disposing the discharge assembly according to the embodiment in the above first aspect in the casing according to the present disclosure, safety of a battery used for the casing can be improved.

In some embodiments, the casing includes: a frame; and a dividing beam located in a space defined by the frame to divide the space into a plurality of accommodation cavities, at least one of the frame and the dividing beam being constructed as the discharge assembly.

In some embodiments, the dividing beam includes a longitudinal beam extending in a length direction of the casing, the longitudinal beam being constructed as the discharge assembly; or the dividing beam includes a transverse beam extending in a width direction of the casing, the transverse beam being constructed as the discharge assembly; or the dividing beam includes a longitudinal beam extending in a length direction of the casing and a transverse beam extending in a width direction of the casing, at least one of the longitudinal beam and the transverse beam being constructed as the discharge assembly.

In some embodiments, the casing includes a top cover including the discharge assembly; or the casing includes a bottom plate comprising the discharge assembly; or the casing includes a top cover and a bottom plate, at least one of the top cover and the bottom plate including the discharge assembly.

According to an embodiment in a third aspect of the present disclosure, a battery is provided. The battery includes: the casing according to the embodiment in the second aspect of the present disclosure; and a plurality of battery cells disposed in the accommodation cavity. By disposing the casing according to the embodiment in the above second aspect in the battery according to the present disclosure, safety of the battery can be improved.

In some embodiments, the casing includes a dividing beam dividing a space in the casing into a plurality of accommodation cavities, the dividing beam being constructed as the discharge assembly. A battery row is disposed at at least one side of the discharge assembly in a width direction of the discharge assembly. The battery row includes the plurality of battery cells sequentially arranged in a length direction of the discharge assembly, each of the plurality of battery cells being configured to discharge the discharge into the discharge cavity separately.

In some embodiments, the battery row is disposed at each of two sides of the discharge assembly in the width direction.

In some embodiments, a plurality of battery rows is disposed at the at least one side of the discharge assembly in the width direction of the discharge assembly, the plurality of battery rows being sequentially arranged in a height direction of the discharge assembly.

In some embodiments, a thickness direction of the battery cell is identical to the height direction of the discharge assembly.

In some embodiments, a side wall surface of the battery cell facing towards the discharge assembly is a first end face, the first end face having a pressure relief region.

In some embodiments, the battery cell has an electrical connection terminal disposed at a wall surface of the battery cell other than the first end face.

In some embodiments, a side wall surface of the battery cell facing away from the discharge assembly is a second end face. The electrical connection terminal of the battery cell is disposed at the second end face.

In some embodiments, the battery cell is mounted at the discharge assembly.

According to an embodiment in a fourth aspect of the present disclosure, a battery is provided. The battery includes: a discharge member having an elongated structure, the discharge member having a discharge cavity, the discharge member having an inlet region formed on each of two side wall surfaces of the discharge member in a width direction of the discharge member, and the discharge cavity being adapted to receive a discharge from a battery cell through the inlet region; a battery row disposed at each of two sides of the discharge assembly in the width direction of the discharge member, the battery row comprising a plurality of battery cells sequentially arranged in a length direction of the discharge member, each of the plurality of battery cells having a pressure relief region at a side of the battery cell facing towards the discharge member, and each of the plurality of battery cells being disposed corresponding to one pressure relief region; and a shield disposed in the discharge member, the shield being spaced apart from the wall surface and configured to shield the inlet region to at least block flames in the discharge, a communication channel in communication with the inlet region and the discharge cavity being formed between the shield and the wall surface to allow a gas in the discharge to enter the discharge cavity. With the battery according to the embodiment in the fourth aspect of the present disclosure, the harm and the scope of impact of thermal runaway can be reduced.

According to an embodiment in a fifth aspect of the present disclosure, an electric device is provided. The electric device includes the battery according to any of the embodiments of the present disclosure. The battery is configured to supply electrical energy for the electric device. By disposing the battery according to any of the above embodiments in the electric device according to the present disclosure, safety performance of the electric device is improved.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

In order to clearly explain technical solutions of embodiments of the present disclosure, drawings used in embodiments are briefly described below. It should be understood that the drawings as described below are merely some embodiments of the present disclosure, and therefore should not be construed as limiting the scope of the present disclosure. Based on these drawings, other relevant drawings can be obtained by those of ordinary skill in the art without creative labor.
FIG. 1 is a schematic view of an electric vehicle A according to an embodiment.
FIG. 2 is a schematic view of a traction battery B according to an embodiment.
FIG. 3 is a perspective view of a battery according to an embodiment of the present disclosure.
FIG. 4 is a perspective view of a discharge assembly illustrated in FIG. 3.
FIG. 5 is an enlarged view of part A illustrated in FIG. 4.
FIG. 6 is an exploded view of the discharge assembly illustrated in FIG. 4.
FIG. 7 to FIG. 15 each are a schematic view of a discharge assembly according to an embodiment of the present disclosure.
FIG. 16 is a schematic view of a first wall surface and a second wall surface according to an embodiment of the present disclosure.
FIG. 17 is a schematic view of a first wall surface and a second wall surface according to another embodiment of the present disclosure.
FIG. 18 to FIG. 29 each are a schematic view of a discharge assembly according to an embodiment of the present disclosure.
FIG. 30 is a schematic view of a shield according to an embodiment of the present disclosure.
FIG. 31 is a schematic view of a shield according to another embodiment of the present disclosure.
FIG. 32 is a schematic view of a discharge assembly according to an embodiment of the present disclosure.
FIG. 33 is an exploded view of a battery according to an embodiment of the present disclosure.
FIG. 34 to FIG. 36 each are a schematic view of a casing according to an embodiment of the present disclosure.
FIG. 37 is a schematic assembled view of a battery cell and a discharge assembly according to an embodiment of the present disclosure.
FIG. 38 is a schematic view of a discharge direction of a discharge assembly according to an embodiment of the present disclosure.
FIG. 39 is a schematic view of a discharge direction of a discharge assembly according to another embodiment of the present disclosure.
FIG. 40 is an exploded view of a battery according to another embodiment of the present disclosure.
FIG. 41 is a schematic view of a discharge direction of the battery illustrated in FIG. 40.
FIG. 42 is an exploded view of a discharge assembly and a battery row according to an embodiment of the present disclosure.
FIG. 43 is a schematic view of an electric device according to an embodiment of the present disclosure.

### Reference numerals of the accompanying drawings:

electric vehicle A; traction battery B; discharge assembly 10;
discharge member 1; discharge cavity 11; wall surface 12; first wall surface 121; second wall surface 122; inlet region 13; first inlet region 131; second inlet region 132; first inlet row 141; second inlet row 142; first inlet column 151; second inlet column 152; support beam 16; third through hole 161; cold plate 17;
shield 2; first shield 21; first through hole 211; second shield 22; second through hole 221; through hole 23; opening 24; fireproof plate 2a; substrate 2b; fireproof layer 2c; communication channel R;
driver 3; support member 4; barrier 5;
casing 100; frame 20; dividing beam 30; longitudinal beam 40; transverse beam 50; top cover 60; bottom plate 70; accommodation cavity 1001;
battery cell 200; first end face 2001; pressure relief region 2002; second end face 2003; electrical connection terminal 2004;
battery row 300; thermal insulator 400; end plate 500; battery 1000; electric device 2000.

### DETAILED DESCRIPTION

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present disclosure.

Various embodiments or examples for implementing different structures of the present disclosure are provided below. To simplify the description of the present disclosure, components and arrangements of specific examples are described herein. These specific examples are merely for the purpose of illustration, rather than limiting the present disclosure. Further, the same reference numerals and/or reference letters may appear in different examples of the present disclosure for the purpose of simplicity and clarity, instead of indicating a relationship between different embodiments and/or the discussed arrangements. In addition, the present disclosure provides examples of various specific processes and materials. However, applications of other processes and/or the use of other materials are conceivable for those of ordinary skill in the art.

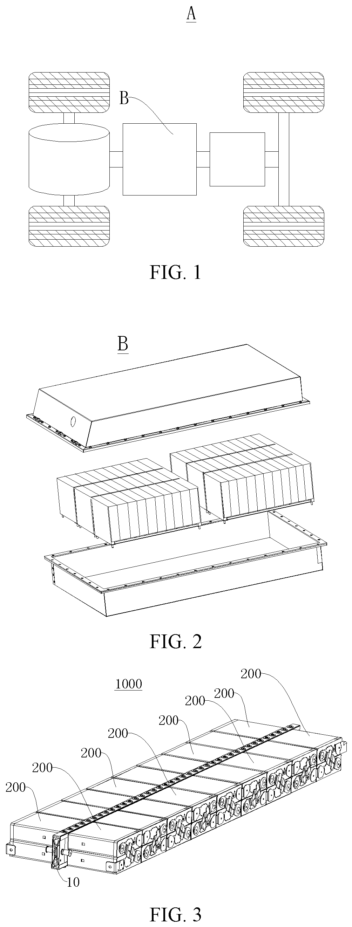

In recent years, new energy vehicles have developed by leaps and bounds. In the field of electric vehicles, traction battery B, which is a power source of electric vehicle A, plays an irreplaceable and important role (as illustrated in FIG. 1 and FIG. 2). Generally speaking, traction battery B is composed of a casing and a number of battery cells accommodated in the casing. As a core component of new energy vehicles, traction battery B is subjected to high requirements in terms of safety and cycle life.

It was found that in a conventional battery used as traction battery B, once thermal runaway occurs, a battery cell releases a large amount of discharges. Flames in the discharges are at a high temperature. If the discharges are left to spread, they are likely to cause secondary damage to the battery or affect other battery cells. Based on this, it is believed that a discharge assembly can be disposed in the battery. Discharges from the battery cell can be collected by the discharge assembly, in such a manner that the discharges are no longer in a free discharge state. Also, a shield can be disposed in the discharge assembly to block the flames in the discharges, which prevents the flames at the high temperature from causing secondary damage to the battery or affecting other battery cells.

It should be noted that a battery to which the discharge assembly according to the embodiments of the present disclosure is applied may or may not include a conventional casing. In addition, a battery according to the embodiments of the present disclosure may, but is not limited to, be applied in an electric device such as a vehicle, a ship, or an aircraft. For example, an electric device using the battery as a power source is provided according to the embodiments of the present disclosure. The electric device may be, but is not limited to, a cell phone, a tablet, a laptop computer, an electric toy, an electric tool, an electric scooter, an electric vehicle, a ship, a spacecraft, and the like.

A discharge assembly 10 according to an embodiment in a first aspect of the present disclosure is described below with reference to the accompanying drawings.

As illustrated in FIG. 3 to FIG. 6, the discharge assembly 10 includes a discharge member 1 having a discharge cavity 11. The discharge member 1 has an inlet region 13 formed on a wall surface 12 of the discharge member 1. The discharge cavity 11 is adapted to receive a discharge from a battery cell 200 through the inlet region 13.

For example, the battery cell 200 is disposed outside of the discharge member 1. When thermal runaway occurs, the battery cell 200 discharges a discharge such as flames, smoke, a gas, or the like. The discharge can enter the discharge member 1 through the inlet region 13 to be, e.g., stored in the discharge cavity 11 or channeled away through the discharge cavity 11.

The inlet region 13 may be of any form. For example, the inlet region 13 may be in the form of an opening, a weak portion, or the like. The form of the inlet region 13 is not limited to any of these examples. Therefore, the disclosure "in communication with the inlet region 13" as used herein refers to being in communication with the inlet region 13 in an open state.

As illustrated in FIG. 3 to FIG. 6, the discharge assembly 10 further includes a shield 2 disposed in the discharge member 1. The shield 2 is adapted to shield the inlet region 13 in a shielding state to at least block flames in the discharge, and adapted to form a communication channel R in communication with the inlet region 13 and the discharge cavity 11 to allow a gas in the discharge to enter the discharge cavity 11.

For example, when the discharge is sprayed into the inlet region 13, the shield 2 in the shielding state can block the flames in the discharge from being sprayed directly into the discharge member 1 from the inlet region 13. That is, at least the flames in the discharges can be blocked by the shield 2. Therefore, effective fire protection is provided to alleviate a thermal diffusion problem due to thermal runaway, while the gas in the discharge can enter the discharge cavity 11 through the communication channel R to meet an exhaust requirement for thermal runaway.

For example, when thermal runaway occurs, the discharge generated by the battery cell 200, such as the flames, the smoke, or the gas, can enter the discharge member 1 through the inlet region 13. With blocking of the shield 2, the flames in the discharge can be effectively isolated to alleviate the thermal diffusion problem. Therefore, the thermal diffusion is prevented from causing other battery cells 200 to be affected by thermal runaway, effectively avoiding secondary damage.

In addition, since the shield 2 is located in the discharge member 1, the shield 2 occupies no space outside the discharge member 1, which enables a compact arrangement between the discharge member 1 and the battery cell 200. Moreover, the shield 2 located in the discharge member 1 can be protected by the discharge member 1 and is therefore less likely to fall off, be damaged by bumping, etc., enhancing protection reliability of the shield 2. In addition, disposing the shield 2 in the discharge member 1 requires no modification of the battery cell 200, which ensures an energy density of the battery cell 200.

It should be noted that the shield 2 may be configured in any manner. For example, in some embodiments, the shield 2 may always be in the shielding state before the battery cell 200 discharges the discharge into the inlet region 13. For example, in other embodiments, the shield 2 may be in a non-shielding state before the battery cell 200 discharges the discharge into the inlet region 13, and may be in the shielding state when the battery cell 200 discharges the discharge into the inlet region 13 or is about to discharge the discharge into the inlet region 13.

It should be noted that, that "the shield 2 is adapted to shield the inlet region 13" should be understood in a broad sense, as long as an orthographic projection of the shield 2 on the wall surface 12 forming the inlet region 13 covers at least part of the inlet region 13. For example, in some embodiments, the orthographic projection of the shield 2 on the wall surface 12 forming the inlet region 13 covers more than 50% of an area of the inlet region 13, and thus a shielding effect can be improved. For example, in other embodiments, the orthographic projection of the shield 2 on the wall surface 12 forming the inlet region 13 completely covers the inlet region 13. For example, coverage of the orthographic projection is exactly the same as or exceeds that of the inlet region 13, both of which improve the shielding effect more effectively.

It should be noted that a manner of forming the communication channel R is not limited. For example, in some embodiments, the communication channel R may be defined by the discharge member 1 and the shield 2 together. For example, in some embodiments, the communication channel R may be defined by the shield 2 alone. The present disclosure is not limited to any of these examples.

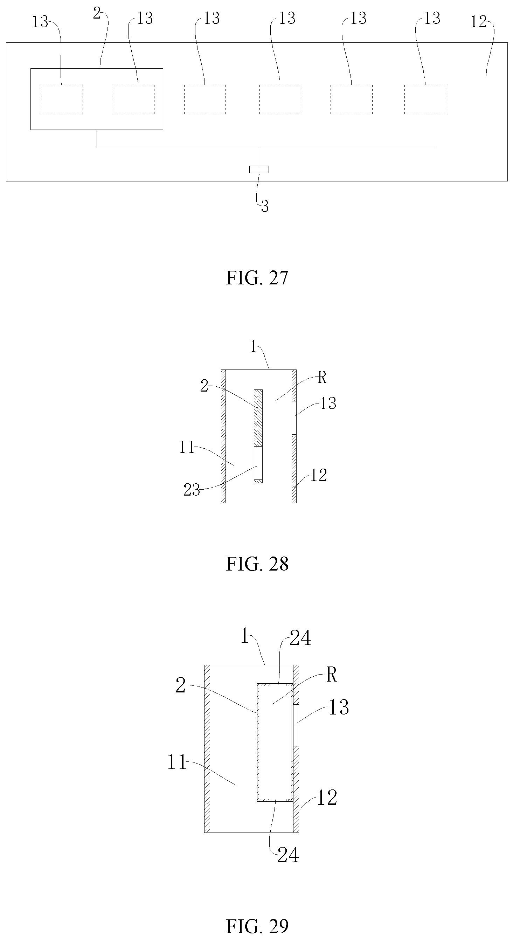

For example, in some specific examples, as illustrated in FIG. 28, when the communication channel R is defined by the discharge member 1 and the shield 2 together, the shield 2 is spaced apart from the wall surface 12 forming the inlet region 13 in the shielding state, to form the communication channel R between the shield 2 and the wall surface 12. The communication channel R is in communication with the discharge cavity 11 at an edge of the shield 2. The shield 2 is opposite to the inlet region 13 to enable the communication channel R to be in communication with the inlet region 13. As a result, a simple structure is realized, which facilitates manufacturing. It should be noted that, that "spaced apart from the wall surface 12" means being spaced apart from the wall surface 12 in a thickness direction of the wall surface 12.

Alternatively, as illustrated in FIG. 28, when the communication channel R is defined by the discharge member 1 and the shield 2 together, the shield 2 is spaced apart from the wall surface 12 forming the inlet region 13 in the shielding state, to form the communication channel R between the shield 2 and the wall surface 12. The shield 2 has a through hole 23 offset from the inlet region 13. That is, an orthographic projection of the through hole 23 on the wall surface 12 forming the inlet region 13 is offset from the inlet region 13. The communication channel R is in communication with the discharge cavity 11 through the through hole 23. Therefore, the flames in the discharge directly sprayed from the inlet region 13 can be blocked by the shield 2, while an airflow in the discharge can enter the discharge cavity 11 through the through hole 23. In this way, dual requirements of exhaust emissions and fire protection can also be satisfied.

Alternatively, as illustrated in FIG. 28, when the communication channel R is defined by the discharge member 1 and the shield 2 together, the shield 2 is spaced apart from the wall surface 12 forming the inlet region 13 in the shielding state, to form the communication channel R between the shield 2 and the wall surface 12. The communication channel R is in communication with the discharge cavity 11 at the edge of the shield 2. In addition, the shield 2 has the through hole 23 offset from the inlet region 13. The communication channel R is further in communication with the discharge cavity 11 through the through hole 23. Therefore, an exhaust emission efficiency can be increased and safety can be improved.

For example, in some specific examples, as illustrated in FIG. 29, when the communication channel R is defined by the shield 2 alone, the shield 2 may be a hollow housing to form the communication channel R in the shield 2. A peripheral side wall of the shield 2 has an opening 24 to enable the communication channel R to be in communication with the discharge cavity 11. The shield 2 is non-spaced from and attached to the wall surface 12 forming the inlet region 13 and enables the communication channel R to be in communication with the inlet region 13. An inner side wall of the shield 2 is spaced apart from the wall surface 12 forming the inlet region 13 and shields the inlet region 13 to provide the fire protection. Therefore, overall structural strength of the discharge assembly 10 can be reinforced.

It should be noted that the discharge member 1 may have the inlet region 13 at only one side of the discharge member 1 or have the inlet region 13 at each of two opposite sides of the discharge member 1. In some embodiments, when the inlet regions 13 at the two sides can be shielded by the shield 2 (which may be one shield 2 or different shields 2), the shield 2 can prevent opposite spraying at the two sides, i.e., prevent the discharge from one side from being directly sprayed to the opposite side, to avoid a danger caused by the opposite spraying due to thermal runaway, improving safety.

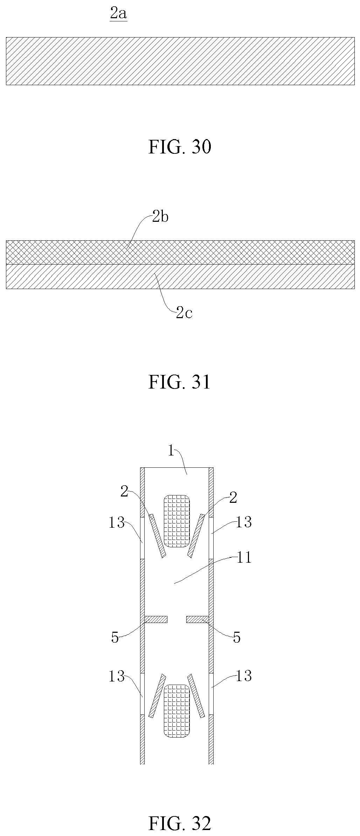

It should be noted that a specific composition and a material of the shield 2 according to the embodiments of the present disclosure are not limited. For example, in some embodiments, the shield 2 may be a fireproof member to provide satisfactory heat resistance and heat insulation. Therefore, relatively effective prevention of heat diffusion can be realized. The fireproof member may be of any form. For example, with reference to FIG. 30, the fireproof member may be a fireproof plate 2a such as a mica plate. For example, with reference to FIG. 31, the fireproof member may include a substrate 2b and a fireproof layer 2c disposed outside the substrate 2b. The fireproof layer 2c may be bonded or sprayed to the substrate 2b. For example, the fireproof layer 2c may be an aerogel layer, a layer made of polypropylene or the like, a fireproof paint layer, etc., and the substrate 2b may be a board, a beam, etc.

It should be noted that the shield 2 of the present disclosure is not limited to being the fireproof member. For example, in other embodiments of the present disclosure, the shield 2 may also have other functions other than fire protection, such as smoke adsorption function, insulation function, and waterproofing function. The present disclosure is not limited to any of these examples.

In addition, in some other embodiments of the present disclosure, the discharge assembly 10 may include, for example, other functional members in addition to the shield 2, such as a structural support member, a cooling member, a particle collection member, or the like.

In some embodiments of the present disclosure, the discharge assembly 10 is applied in a battery 1000. The battery 1000 includes at least one battery cell 200. Therefore, with the discharge assembly 10 according to the embodiments of the present disclosure, in the event of thermal runaway, not only can the exhaust emission requirement be satisfied, but also can the thermal diffusion problem be alleviated, avoiding a failure of the battery 1000 caused by thermal diffusion. For example, the battery cell 200 may be disposed at an outer side of a part of the discharge member 1 where the inlet region 13 is formed. A pressure relief region 2002 (e.g., a pressure relief structure or a weak portion) of the battery cell 200 faces the inlet region 13, in such a manner that the discharge is quickly discharged towards the inlet region 13 when thermal runaway occurs. Alternatively, when the battery cell 200 has no pressure relief region, e.g., as in a case of a conventional soft-packaged battery cell, one inlet region 13 may be formed at each soft-packaged battery cell correspondingly. Therefore, the discharge can enter the discharge member 1 through traveling a relatively short path.

The battery 1000 according to some embodiments of the present disclosure may include a casing for packaging one or more battery cells 200. The casing can prevent a liquid or other foreign matter from affecting charging or discharging of the battery cell 200. Alternatively, according to some other embodiments of the present disclosure, the battery 1000 may include no casing for packaging one or more battery cells 200. For example, the discharge assembly 10 and the battery cell 200 can be directly disposed in a mounting cavity of an electric device 2000.

When a plurality of battery cells 200 is provided, the plurality of battery cells 200 may be disposed directly in the casing or the mounting cavity of the electric device 2000 without modularization. In this case, the plurality of battery cells 200 may be connected in series and/or in parallel, or the plurality of battery cells 200 may form a battery module. A plurality of battery modules is placed in the casing or the mounting cavity of the electric device 2000. In this case, the plurality of battery cells 200 in each battery module may be connected in series and/or in parallel, and the plurality of battery modules may also be connected in series and/or in parallel.

It should be noted that a shape and a type of the battery cell 200 according to the embodiments of the present disclosure are not limited. The battery cell 200 may be in a shape of a cylinder, a shape of a flat sheet, a shape of a cuboid, or other shapes, etc. The battery cell 200 may be classified as a cylindrical battery cell, a square battery cell, or a soft-packaged battery cell, etc., in accordance with a type of package. In addition, the battery cell 200 may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The present disclosure is not limited in this regard.

For example, the battery cell 200 may include an electrode assembly and an electrolyte. The electrode assembly includes a positive electrode sheet, a negative electrode sheet, and a separator. The electrode assembly may be of a coiled structure or a laminated structure, etc. The positive electrode sheet includes a positive current collector and a positive active substance layer. The negative electrode sheet includes a negative current collector and a negative active substance layer. As an example, for a lithium-ion battery, the positive current collector may be made of aluminum, the positive active substance may be lithium cobaltate, lithium iron phosphate, lithium ternary, or lithium manganate, etc., the negative current collector may be made of copper, and the negative active substance may be carbon, silicon, or the like. Details thereof are omitted here.

When thermal runaway occurs, the discharge generated by the battery cell 200, such as the flames, the smoke, or the gas, may enter the discharge member 1 through the inlet region 13. With the blocking of the shield 2, at least the flames in the discharge can be isolated to a predetermined extent to alleviate the thermal diffusion problem. Therefore, the thermal diffusion is prevented from causing other battery cells 200 in the battery 1000 to be affected by thermal runaway, effectively avoiding the secondary damage to the battery 1000 caused by thermal diffusion.

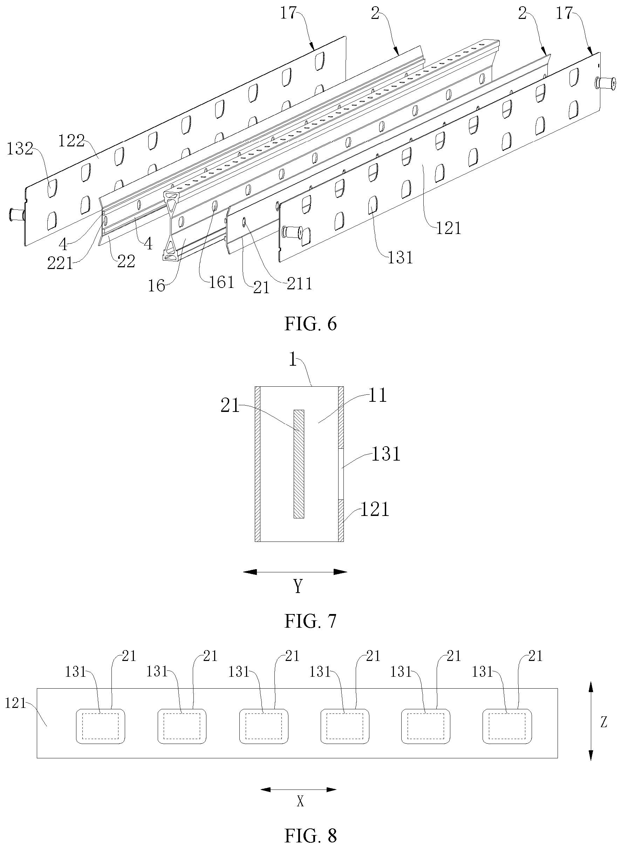

In some embodiments of the present disclosure, as illustrated in FIG. 6 and FIG. 7, the discharge member 1 includes a first wall surface 121. The inlet region 13 includes a plurality of first inlet regions 131 formed on the first wall surface 121. The shield 2 includes a first shield 21. The first shield 21 is spaced apart from the first wall surface 121 in the shielding state. An orthographic projection of the first shield 21 on the first wall surface 121 covers the plurality of first inlet regions 131. Therefore, the communication channel R can be formed by spacing the first shield 21 apart from the first wall surface 121. By allowing the orthographic projection of the first shield 21 on the first wall surface 121 to cover the plurality of first inlet regions 131, the first inlet regions 131 can be shielded to block the flames that are directly sprayed from the first inlet regions 131. Therefore, a setting scheme of the first shield 21 is simple and easy to realize. In addition, a satisfactory shielding effect can be realized.

It should be noted that, that "spaced apart from the first wall surface 121" means being spaced apart from the first wall surface 121 in a thickness direction of the first wall surface 121.

In some embodiments of the present disclosure, as illustrated in FIG. 8, a plurality of first shields 21 is provided and arranged at intervals. The plurality of first inlet regions 131 is shielded by the plurality of first shields 21 in a one-to-one correspondence. That is, first shields 21 and first inlet regions 131 have the same quantity and are arranged in a one-to-one correspondence to realize one-to-one individual shielding. Therefore, an area and costs of the first shield 21 can be reduced. In addition, a spacing between two adjacent first shields 21 can form a fluid path configured to communicate the discharge cavity 11 and the communication channel R, which facilitates rapid exhaust emissions from the communication channel R to the discharge cavity 11. As a result, the exhaust emission efficiency can be increased and the safety can be improved.

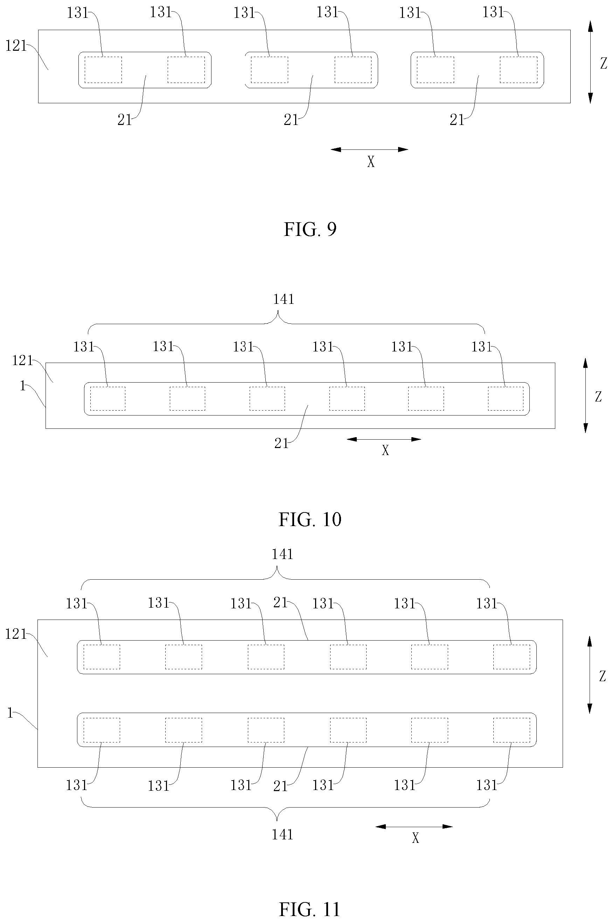

In some other embodiments of the present disclosure, as illustrated in FIG. 9, at least two adjacent first inlet regions 131 are shielded by one first shield 21. That is, the quantity of first shields 21 is less than that of first inlet regions 131 to realize one-to-many shielding. Therefore, the quantity of first shields 21 can be reduced to improve a mounting efficiency of the first shields 21.

For example, in some examples, as illustrated in FIG. 10, all of the first inlet regions 131 are shielded by one first shield 21. That is, the orthographic projection of the first shield 21 in the shielding state on the first wall surface 121 covers all of the first inlet regions 131. Therefore, mounting of the first shield 21 is facilitated, which increases an overall manufacturing efficiency of the discharge assembly 10.

For example, in some examples, as illustrated in FIG. 10, a first inlet row 141 is defined by the plurality of first inlet regions 131 arranged in a length direction X of the discharge member 1. The plurality of first inlet regions 131 in the first inlet row 141 is shielded by one first shield 21. For example, the first shield 21 may extend in the length direction X of the discharge member 1, and the orthographic projection of the first shield 21 in the shielding state on the first wall surface 121 covers all of the first inlet regions 131 in the first inlet row 141. Therefore, the first shield 21 has a simple structure and is easy to mount, which can improve the manufacturing efficiency of the discharge assembly 10.

It should be noted that the length direction of the discharge member 1 is a length direction of the discharge assembly 10, both of which are the direction X illustrated in the figures. A width direction of the discharge member 1 is a width direction of the discharge assembly 10, both of which are a direction Y illustrated in the figures. A height direction of the discharge member 1 is a height direction of the discharge assembly 10, both of which are a direction Z illustrated in the figures.

Further, as illustrated in FIG. 11, a plurality of first inlet rows 141 is defined on the first wall surface 121 and arranged in the height direction Z of the discharge member 1. The first shields 21 corresponding to multiple first inlet rows 141 of the plurality of first inlet rows 141 are arranged at intervals in the height direction Z of the discharge member 1. For example, the quantity of first shields 21 is the same as that of first inlet rows 141. The plurality of first shields 21 is arranged at intervals in the height direction Z of the discharge member 1, to realize a one-to-one correspondence between the first shields 21 and the first inlet rows 141. Therefore, given that the first shield 21 has the simple structure and is easy to mount, the rapid exhaust emissions from the communication channel R to the discharge cavity 11 can be facilitated, considering that a spacing between two adjacent first shields 21 spaced apart in the height direction Z can form the fluid path configured to communicate the discharge cavity 11 and the communication channel R. As a result, the exhaust emission efficiency can be increased, and the safety can be improved.

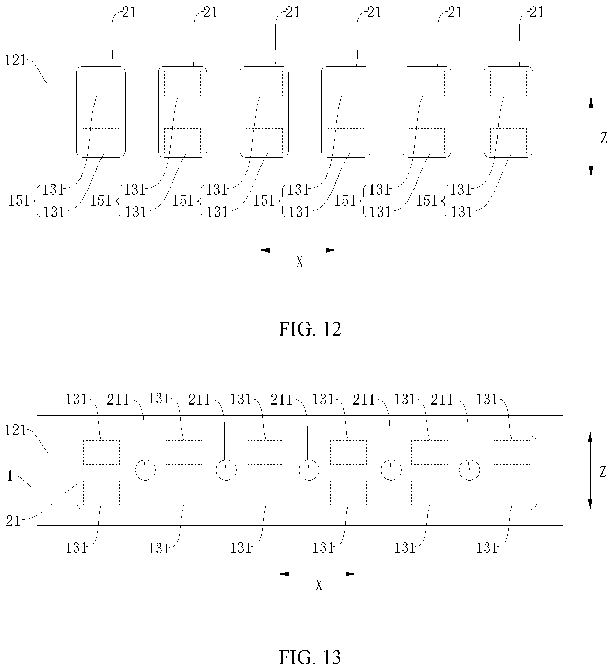

For example, in some examples, as illustrated in FIG. 12, a first inlet column 151 is defined by multiple first inlet regions 131 of the plurality of first inlet regions 131 arranged in the height direction Z of the discharge member 1. The multiple first inlet regions 131 in the first inlet column 151 are shielded by one first shield 21. For example, the first shield 21 may extend in the height direction Z of the discharge member 1, and the orthographic projection of the first shield 21 in the shielding state on the first wall surface 121 covers all of the first inlet regions 131 in the first inlet column 151. Therefore, the first shield 21 has the simple structure and is easy to mount, which can improve the manufacturing efficiency of the discharge assembly 10.

Further, as illustrated in FIG. 12, a plurality of first inlet columns 151 is defined on the first wall surface 121 and arranged in the length direction X of the discharge member 1. The first shields 21 corresponding to the plurality of first inlet columns 151 are arranged at intervals in the length direction X of the discharge member 1. For example, the quantity of first shields 21 is the same as that of first inlet columns 151. The first shields 21 are arranged at intervals in the length direction X of the discharge member 1, to realize a one-to-one correspondence between the first shields 21 and the first inlet columns 151. Therefore, given that the first shield 21 has the simple structure and is easy to mount, the rapid exhaust emissions from the communication channel R to the discharge cavity 11 can be facilitated, considering that a spacing between two adjacent first shields 21 spaced apart in the length direction X can form the fluid path configured to communicate the discharge cavity 11 and the communication channel R. As a result, the exhaust emission efficiency can be increased, and the safety can be improved.

In some embodiments of the present disclosure, as illustrated in FIG. 3 to FIG. 6, the discharge member 1 has an elongated structure. That is, the discharge member 1 has a length greater than a width of the discharge member 1 and a height of the discharge member 1. In addition, the length, the width, and the height of the discharge member 1 are pairwise perpendicular to each other. The first inlet region 131 is disposed at at least one side of the discharge member 1 in the width direction Y of the discharge member 1. Therefore, by disposing the first inlet region 131 at the at least one side of the discharge member 1 in the width direction Y of the discharge member 1, the first inlet region 131 can be formed on a relatively large wall surface of the discharge member 1. Therefore, the quantity of first inlet regions 131 can be increased, which facilitates cooperation between the discharge member 1 and a larger quantity of battery cells 200.

In some embodiments of the present disclosure, as illustrated in FIG. 13, the first shield 21 may have a first through hole 211. An orthographic projection of the first through hole 211 on the first wall surface 121 is offset from the first inlet region 131. Therefore, the first through hole 211 can be utilized to form at least part of the fluid path configured to communicate the discharge cavity 11 and the communication channel R, which facilitates the rapid exhaust emissions from the communication channel R to the discharge cavity 11. As a result, the exhaust emission efficiency can be increased, and the safety can be improved. For example, the flames in the discharge that is directly sprayed from the first inlet region 131 can be effectively blocked by the first shield 21, while the gas in the discharge that is directly sprayed from the first inlet region 131 can be discharged to the discharge cavity 11 through the first through hole 211. Therefore, the fire protection can be ensured while the exhaust emission requirement can be satisfied, improving the safety.

It should be noted that no matter how many first inlet regions 131 the first shield 21 is configured to shield, the first through hole 211 can be formed on the first shield 21 as desired. That is, a setting scheme of the first through hole 211 is not limited to the embodiment illustrated in FIG. 13.

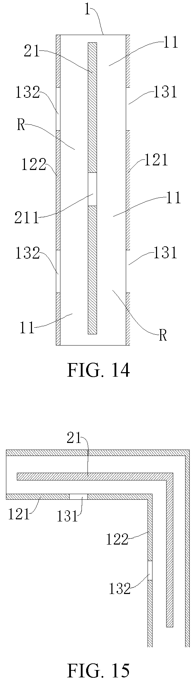

In some specific examples, as illustrated in FIG. 14, part of the fluid path configured to communicate the discharge cavity 11 and the communication channel R is formed through an edge of the first shield 21, and part of the fluid path configured to communicate the discharge cavity 11 and the communication channel R is formed through the first through hole 211, thereby the rapid exhaust emissions from the communication channel R to the discharge cavity 11 can be facilitated, which facilitates an increase in the exhaust emission efficiency.

In some embodiments of the present disclosure, as illustrated in FIG. 14, the discharge member 1 has a second wall surface 122. The inlet region 13 includes a plurality of second inlet regions 132 formed on the second wall surface 122. The first shield 21 is spaced apart from the second wall surface 122 in the shielding state. An orthographic projection of the first shield 21 on the second wall surface 122 covers the plurality of second inlet regions 132. Therefore, the communication channel R can be formed by spacing the first shield 21 apart from the second wall surface 122. Since the orthographic projection of the first shield 21 on the second wall surface 122 covers the plurality of second inlet regions 132, the second inlet regions 132 can be shielded to block the flames that are directly sprayed from the second inlet regions 132. Therefore, the first shield 21 can provide dual protection. That is, the first shield 21 can provide protection for both the first inlet regions 131 and the second inlet regions 132, which can simplify an arrangement and mounting of the shield 2.

It should be noted that, that "spaced apart from the second wall surface 122" means being spaced apart from the second wall surface 122 in a thickness direction of the second wall surface 122.

It should be noted that relative positions of the first wall surface 121 and the second wall surface 122 are not limited. For example, the first wall surface 121 and the second wall surface 122 may be adjacent to each other or opposite to each other. For example, when the first wall surface 121 and the second wall surface 122 are adjacent to each other, the first shield 21 may be in a form of a folded corner, as illustrated in FIG. 15. For example, as illustrated in FIG. 14, when the first wall surface 121 and the second wall surface 122 are opposite to each other, e.g., two side wall surfaces of the discharge member 1 in the width direction of the discharge member 1, the first shield 21 is in a form of a plate, a beam, etc.

For example, in some embodiments, as illustrated in FIG. 14, the second wall surface 122 and the first wall surface 121 are two opposite side walls of the discharge member 1. The first shield 21 is located between the first wall surface 121 and the second wall surface 122. The second wall surface 122 is located at a side of the first shield 21 facing away from the first wall surface 121. Therefore, the first shield 21 is in an unlimited shape and can be designed flexibly. In addition, with the first shield 21 disposed between two opposite sides for protection, the opposite spraying at the two sides can be prevented, further improving the safety.

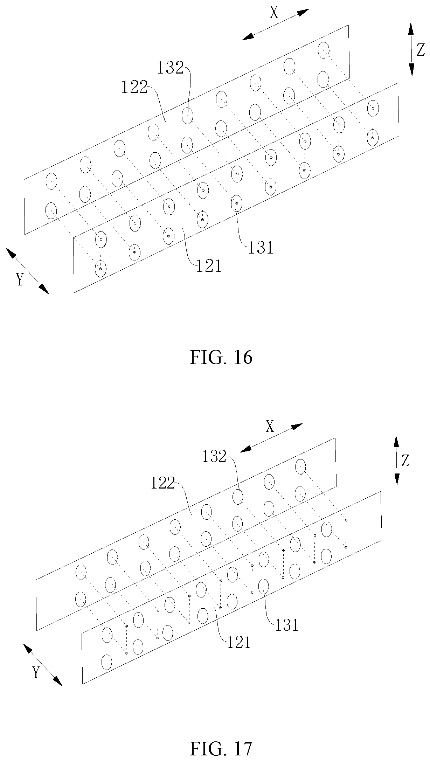

As illustrated in FIG. 16, the first inlet region 131 may be directly opposite to the second inlet region 132. In this way, the battery cell 200 at an outer side of the first wall surface 121 may be directly opposite to the battery cell 200 at an outer side of the second wall surface 122, which facilitates an improvement of a space utilization rate and increases the energy density. Alternatively, as illustrated in FIG. 17, the first inlet region 131 may also be offset from the second inlet region 132. That is, the first inlet region 131 is not directly opposite to the second inlet region 132. Therefore, the opposite spraying at the two sides can be further prevented, improving the safety.

In some embodiments of the present disclosure, the discharge member 1 has the elongated structure. That is, the discharge member 1 has the length greater than the width of the discharge member 1 and the height of the discharge member 1. In addition, the length, the width, and the height of the discharge member 1 are pairwise perpendicular to each other. The second wall surface 122 and the first wall surface 121 are two side walls of the discharge member 1 in the width direction of the discharge member 1. In this way, the first inlet region 131 may be formed at a side of the discharge member 1 in the width direction of the discharge member 1, while the second inlet region 132 is formed at another side of the discharge member 1 in the width direction of the discharge member 1. Therefore, the first inlet region 131 and the second inlet region 132 may be formed on the relatively large wall surface of the discharge member 1 to increase quantities of first inlet regions 131 and second inlet regions 132, which facilitates the cooperation between the discharge member 1 and a larger quantity of battery cells 200, and increases the energy density. As illustrated in FIG. 14, the first shield 21 is located at a central position between the first wall surface 121 and the second wall surface 122. For example, the first shield 21 extends in the length direction of the discharge member 1 and is located at a central position in the width direction of the discharge member 1. Therefore, a structural design can be simplified, a satisfactory shielding effect can be provided, and a relatively large exhaust space can be achieved.

In some embodiments of the present disclosure, as illustrated in FIG. 14, the first shield 21 has the first through hole 211. The orthographic projection of the first through hole 211 on the first wall surface 121 is offset from the first inlet region 131. The orthographic projection of the first through hole 211 on the second wall surface 122 is offset from the second inlet region 132. Therefore, the first through hole 211 can be utilized to form communication between two sides of the first shield 21, which increases an exhaust volume to avoid a problem of pressure burst caused by an insufficient exhaust volume, improving the safety. For example, the flames in the discharge that is directly sprayed from the first inlet region 131 can be effectively blocked by the first shield 21, while the gas in the discharge that is directly sprayed from the first inlet region 131 can be discharged to the discharge cavity 11 through the first through hole 211. Also, the flames in the discharge that is directly sprayed from the second inlet region 132 can be effectively blocked by the first shield 21, while the gas in the discharge that is directly sprayed from the second inlet region 132 can be discharged to the discharge cavity 11 through the first through hole 211. Therefore, the fire protection can be ensured while the exhaust emission requirement can be satisfied, improving the safety.

In some specific examples, as illustrated in FIG. 14, part of the fluid path configured to communicate the discharge cavity 11 and the communication channel R is formed through an edge of the first shield 21, and part of the fluid path configured to communicate the discharge cavity 11 and the communication channel R is formed through the first through hole 211, the rapid exhaust emissions from the communication channel R to the discharge cavity 11 can be facilitated, which facilitates an increase in the exhaust emission efficiency. In addition, two sides of the first shield 21 can be in communication with each other, which increases the exhaust volume to avoid the problem of pressure burst caused by the insufficient exhaust volume, improving the safety.

In summary, with the first shield 21, the problem of opposite spraying can be effectively solved to provide relatively effective shielding against the opposite spraying. In addition, designs in terms of an exhaust space and the energy density are balanced.

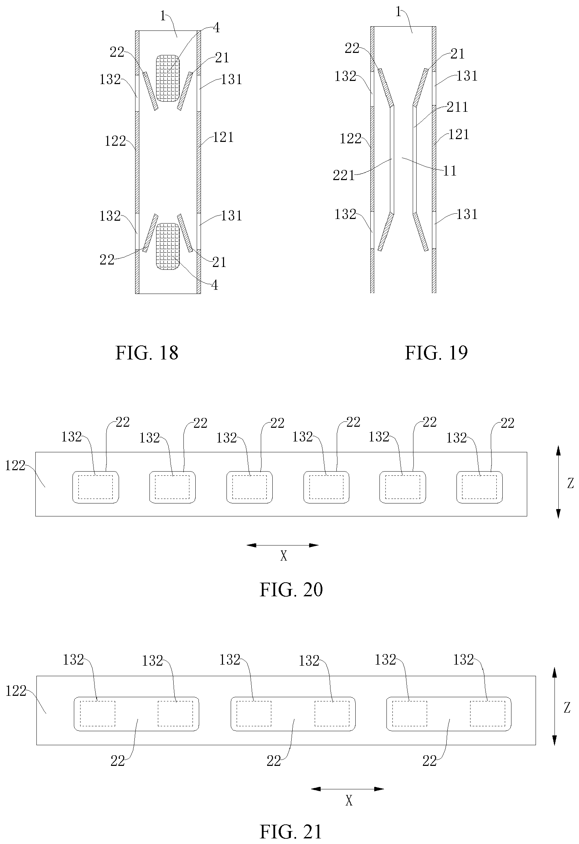

In some embodiments of the present disclosure, as illustrated in FIG. 18 and FIG. 19, the discharge member 1 includes the second wall surface 122. The inlet region 13 includes the plurality of second inlet regions 132 formed on the second wall surface 122. The shield 2 includes a second shield 22. The second shield 22 is spaced apart from the second wall surface 122 in the shielding state. An orthographic projection of the second shield 22 on the second wall surface 122 covers the plurality of second inlet regions 132. Therefore, the communication channel R can be formed by spacing the second shield 22 apart from the second wall surface 122. By allowing the orthographic projection of the second shield 22 on the second wall surface 122 to cover the plurality of second inlet regions 132, the second inlet regions 132 can be shielded to block the flames that are directly sprayed from the second inlet regions 132. Therefore, a setting scheme of the second shield 22 is simple and easy to realize. In addition, the satisfactory shielding effect can be realized.

It should be noted that, that "spaced apart from the second wall surface 122" means being spaced apart from the second wall surface 122 in the thickness direction of the second wall surface 122.

Therefore, the first shield 21 and the second shield 22 provide shielding against the inlet regions 13 on different wall surfaces 12, and thus the first shield 21 and the second shield 22 can be designed flexibly and implemented in various ways. It should be noted that the relative positions of the first wall surface 121 and the second wall surface 122 are not limited. For example, the first wall surface 121 and the second wall surface 122 may be adjacent to each other. For example, the first wall surface 121 and the second wall surface 122 may be opposite to each other.

For example, in some embodiments, as illustrated in FIG. 18 and FIG. 19, the second wall surface 122 and the first wall surface 121 are two opposite side walls of the discharge member 1. The second shield 22 is disposed at a side of the first shield 21 close to the second wall surface 122. That is, the first shield 21 and the second shield 22 are both located between the first wall surface 121 and the second wall surface 122. The first shield 21 is closer to the first wall surface 121 than the second shield 22. The second shield 22 is closer to the second wall surface 122 than the first shield 21. Therefore, the simple structure is realized, the manufacturing is facilitated, and the relatively satisfactory shielding effect is provided.

In addition, with the first shield 21 and the second shield 22 that are disposed between two opposite sides for protection, the opposite spraying at the two sides can be prevented, further improving the safety. As illustrated in FIG. 16, the first inlet region 131 may be directly opposite to the second inlet region 132. In this way, the battery cell 200 at the outer side of the first wall surface 121 may be directly opposite to the battery cell 200 at the outer side of the second wall surface 122, which facilitates the improvement of the space utilization rate and increases the energy density. Alternatively, as illustrated in FIG. 17, the first inlet region 131 may also be offset from the second inlet region 132. That is, the first inlet region 131 is not directly opposite to the second inlet region 132. Therefore, the opposite spraying at the two sides can be further prevented, improving the safety.

In some embodiments of the present disclosure, the discharge member 1 has the elongated structure. That is, the discharge member 1 has the length greater than the width of the discharge member 1 and the height of the discharge member 1. In addition, the length, the width, and the height of the discharge member 1 are pairwise perpendicular to each other. The second wall surface 122 and the first wall surface 121 are the two side walls of the discharge member 1 in the width direction of the discharge member 1. In this way, the first inlet region 131 may be formed at the side of the discharge member 1 in the width direction of the discharge member 1, while the second inlet region 132 is formed at the other side of the discharge member 1 in the width direction of the discharge member 1. Therefore, the first inlet region 131 and the second inlet region 132 may be formed on the relatively large wall surface of the discharge member 1 to increase the quantities of first inlet regions 131 and second inlet regions 132, which facilitates the cooperation between the discharge member 1 and a larger quantity of battery cells 200, and increases the energy density. The first shield 21 and second shield 22 both extend in the length direction X of the discharge member 1 and are located between the first wall surface 121 and the second wall surface 122. The first shield 21 is closer to the first wall surface 121 than the second shield 22. The second shield 22 is closer to the second wall surface 122 than the first shield 21. Therefore, the structural design can be simplified, the satisfactory shielding effect can be provided, and the relatively large exhaust space can be achieved.

In some embodiments, as illustrated in FIG. 18 and FIG. 19, the second shield 22 is spaced apart from the first shield 21, to define at least a part of the discharge cavity 11 between the first shield 21 and the second shield 22. In this way, the relatively large exhaust space can be achieved, while a relatively reliable shielding effect can be provided.

In some embodiments of the present disclosure, as illustrated in FIG. 20, a plurality of second shields 22 is provided and arranged at intervals. The plurality of second inlet regions 132 is shielded by the plurality of second shields 22 in a one-to-one correspondence. That is, second shields 22 and second inlet regions 132 have the same quantity and are arranged in a one-to-one correspondence to realize one-to-one individual shielding. Therefore, an area and costs of the second shield 22 can be reduced. In addition, a spacing between two adjacent second shields 22 can form a fluid path configured to communicate the discharge cavity 11 and the communication channel R, which facilitates the rapid exhaust emissions from the communication channel R to the discharge cavity 11. As a result, the exhaust emission efficiency can be increased and the safety can be improved.

In some other embodiments of the present disclosure, as illustrated in FIG. 21, at least two adjacent second inlet regions 132 are shielded by one second shield 22. That is, the quantity of second shields 22 is less than that of second inlet regions 132 to realize one-to-many shielding. Therefore, the quantity of second shields 22 can be reduced to improve a mounting efficiency of the second shields 22.

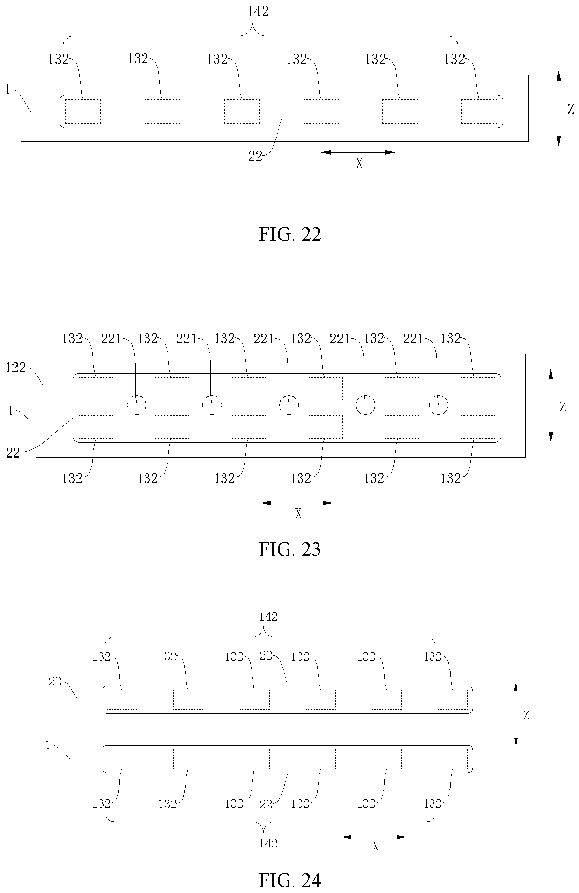

For example, in some examples, as illustrated in FIG. 22 and FIG. 23, all of the second inlet regions 132 are shielded by one second shield 22. That is, the orthographic projection of the second shield 22 in the shielding state on the second wall surface 122 covers all of the second inlet regions 132. Therefore, mounting of the second shield 22 is facilitated, which increases the overall manufacturing efficiency of the discharge assembly 10.

For example, in some examples, as illustrated in FIG. 24, a second inlet row 142 is defined by multiple second inlet regions 132 of the plurality of second inlet regions 132 arranged in the length direction X of the discharge member 1. The multiple second inlet regions 132 in the second inlet row 142 are shielded by one second shield 22. For example, the second shield 22 may extend in the length direction X of the discharge member 1, and the orthographic projection of the second shield 22 in the shielding state on the second wall surface 122 covers all of the second inlet regions 132 in the second inlet row 142. Therefore, the second shield 22 has the simple structure and is easy to mount, which can improve the manufacturing efficiency of the discharge assembly 10.

Further, as illustrated in FIG. 24, a plurality of second inlet rows 142 is defined on the second wall surface 122 and arranged in the height direction Z of the discharge member 1. The second shields 22 corresponding to the plurality of second inlet rows 142 are arranged at intervals in the height direction Z of the discharge member 1. For example, the quantity of second shields 22 is the same as that of second inlet rows 142. The plurality of second shields 22 is arranged at intervals in the height direction Z of the discharge member 1, to realize a one-to-one correspondence between the second shields 22 and the second inlet rows 142. Therefore, given that the second shield 22 has the simple structure and is easy to mount, the rapid exhaust emissions from the communication channel R to the discharge cavity 11 can be facilitated, considering that a spacing between two adjacent second shields 22 spaced apart in the height direction Z can form the fluid path configured to communicate the discharge cavity 11 and the communication channel R. As a result, the exhaust emission efficiency can be increased, and the safety can be improved.

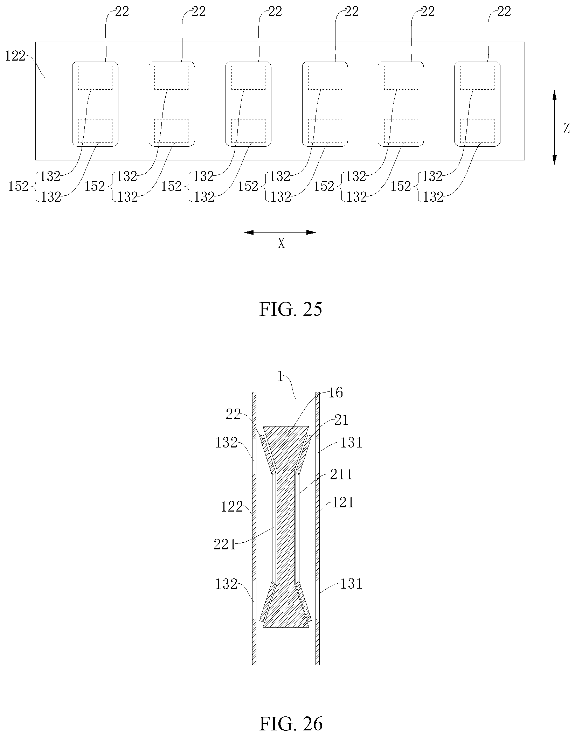

For example, in some examples, as illustrated in FIG. 25, a second inlet column 152 is defined by multiple second inlet regions 132 of the plurality of second inlet regions 132 arranged in the height direction Z of the discharge member 1. The multiple second inlet regions 132 in the second inlet column 152 are shielded by one second shield 22. For example, the second shield 22 may extend in the height direction Z of the discharge member 1, and the orthographic projection of the second shield 22 in the shielding state on the second wall surface 122 covers all of the second inlet regions 132 in the second inlet column 152. Therefore, the second shield 22 has the simple structure and is easy to mount, which can improve the manufacturing efficiency of the discharge assembly 10.

Further, as illustrated in FIG. 25, a plurality of second inlet columns 152 is defined on the second wall surface 122 and arranged in the length direction X of the discharge member 1. The second shields 22 corresponding to the plurality of second inlet columns 152 are arranged at intervals in the length direction X of the discharge member 1. For example, the quantity of second shields 22 is the same as that of second inlet columns 152. The second shields 22 are arranged at intervals in the length direction X of the discharge member 1, to realize a one-to-one correspondence between the second shields 22 and the second inlet columns 152. Therefore, given that the second shield 22 has the simple structure and is easy to mount, the rapid exhaust emissions from the communication channel R to the discharge cavity 11 can be facilitated, considering that a spacing between two adjacent second shields 22 spaced apart in the length direction X can form the fluid path configured to communicate the discharge cavity 11 and the communication channel R. As a result, the exhaust emission efficiency can be increased, and the safety can be improved.

In some embodiments of the present disclosure, as illustrated in FIG. 23, the second shield 22 has a second through hole 221. An orthographic projection of the second through hole 221 on the second wall surface 122 is offset from the second inlet region 132. Therefore, the second through hole 221 can be utilized to form at least part of the fluid path configured to communicate the discharge cavity 11 and the communication channel R, which facilitates the rapid exhaust emissions from the communication channel R to the discharge cavity 11. As a result, the exhaust emission efficiency can be increased, and the safety can be improved. For example, the flames in the discharge that is directly sprayed from the second inlet region 132 can be effectively blocked by the second shield 22, while the gas in the discharge that is directly sprayed from the second inlet region 132 can be discharged to the discharge cavity 11 through the second through hole 221. Therefore, the fire protection can be ensured while the exhaust emission requirement can be satisfied, improving the safety. In addition, with the second through hole 221, the exhaust volume can be increased to avoid the problem of pressure burst caused by the insufficient exhaust volume, improving the safety.

It should be noted that no matter how many second inlet regions 132 the second shield 22 is configured to shield, the second through hole 221 can be formed on the second shield 22 as desired. That is, a setting scheme of the second through hole 221 is not limited to the embodiment illustrated in FIG. 23.

When the second shield 22 has the second through hole 221 and the orthographic projection of the second through hole 221 on the second wall surface 122 is offset from the second inlet region 132, in some examples, the first shield 21 may simultaneously have the first through hole 211. The orthographic projection of the first through hole 211 on the first wall surface 121 is offset from the first inlet region 131. Therefore, the flames in the discharge that is directly sprayed from the first inlet region 131 can be effectively blocked by the first shield 21, while the gas in the discharge that is directly sprayed from the first inlet region 131 can be discharged to the discharge cavity 11 through the first through hole 211. Also, the flames in the discharge that is directly sprayed from the second inlet region 132 can be effectively blocked by the second shield 22, while the gas in the discharge that is directly sprayed from the second inlet region 132 can be discharged to the discharge cavity 11 through the second through hole 221. Therefore, the fire protection can be ensured while the exhaust emission requirement can be satisfied, improving the safety. In addition, the exhaust volume can be increased to avoid the problem of pressure burst caused by the insufficient exhaust volume, improving the safety. The first through hole 211 and the second through hole 221 may be directly opposite to each other or offset from each other, a specific design of which can be adjusted as desired. The present disclosure is not limited in this regard.

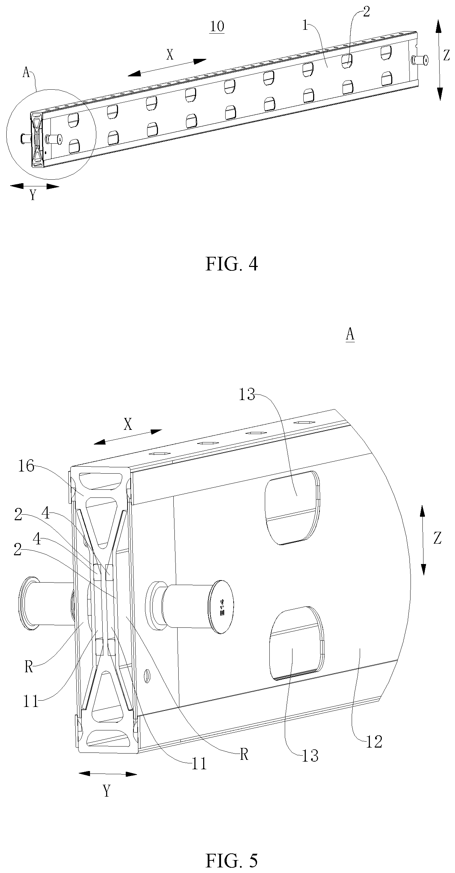

In some embodiments, as illustrated in FIG. 5 and FIG. 6, the second wall surface 122 and the first wall surface 121 are the two side walls of the discharge member 1 in the width direction of the discharge member 1. A support beam 16 extending in the length direction X of the discharge member 1 is disposed in the discharge member 1. The first shield 21 is disposed at a side of the support beam 16 facing towards the first wall surface 121. The second shield 22 is disposed at a side of the support beam 16 facing towards the second wall surface 122. The support beam 16 has a third through hole 161.

Therefore, with the support beam 16, the discharge member 1 can have satisfactory structural strength. In addition, with the third through hole 161 on the support beam 16, the gas coming from the first inlet region 131 can pass through the first through hole 211 and the third through hole 161 to arrive at a side of the support beam 16 facing towards the second shield 22, while the gas coming from the second inlet region 132 can pass through the second through hole 221 and the third through hole 161 to arrive at a side of the support beam 16 facing towards the first shield 21. Therefore, the discharge member 1 has a relatively large exhaust space, which avoids the problem of pressure burst caused by the insufficient exhaust volume, improving the safety.

The third through hole 161 and the second through hole 221 may be directly opposite to each other or offset from each other, a specific design of which can be adjusted as desired. The present disclosure is not limited in this regard. Similarly, the third through hole 161 and the first through hole 211 may be directly opposite to each other or offset from each other, a specific design of which can be adjusted as desired. The present disclosure is not limited in this regard.

For example, in the above embodiments, a part of the discharge cavity 11 may be located between the first shield 21 and the support beam 16, and another part of the discharge cavity 11 may be located between the second shield 22 and the support beam 16. Alternatively, a part of the discharge cavity 11 may be located between the first shield 21 and the support beam 16, a part of the discharge cavity 11 may be located between the second shield 22 and the support beam 16, and a remaining part of the discharge cavity 11 may be located in the support beam 16, and so forth. The present disclosure is not limited in this regard.

In summary, with the first shield 21 and the second shield 22, the problem of opposite spraying can be effectively solved to provide the relatively effective shielding against the opposite spraying. In addition, the designs in terms of the exhaust space and the energy density are balanced.

In some embodiments of the present disclosure, a position of at least one shield 2 is fixed. When the shield 2 is unadjustable relative to the discharge member 1, a difficulty of setting the shield 2 can be reduced, which makes manufacturing easy. In addition, the shield 2 is constantly in the shielding state, which provides the relatively reliable shielding effect.

For example, as illustrated in FIG. 26, the support beam 16 is disposed in the discharge member 1. The shield 2 is fixedly disposed at the support beam 16. Therefore, the difficulty of setting the shield 2 can be reduced while improving the structural strength of the discharge member 1. The position of the shield 2 can be ensured to be fixed, which allows the shield 2 to provide the relatively effective shielding effect. It should be noted that a connection between the shield 2 and the support beam 16 is not limited, e.g., it may be a direct connection, an indirect assembled connection (e.g., adhering, snap connection, connection through threads, welding, etc.), a coating-based connection, and so on.

When the shield 2 is fixedly disposed at the support beam 16, in some embodiments, the shield 2 has a shape matching a shape of a wall surface of the support beam 16 at corresponding positions, which improves reliability of the connection, and improves a support effect of the support beam 16 on the shield 2. In addition, engagement positions exhibit enhanced compactness, which saves space and enlarges the exhaust space. Of course, the present disclosure is not limited in this regard. For example, in other embodiments of the present disclosure, the shield 2 and the support beam 16 may have shapes that do not match each other to meet different design requirements.

For example, when the shield 2 is in the shape of a plate, the plate may include a flat plate parallel to the wall surface 12 with the inlet region 13, an inclined panel inclined to the wall surface 12 with the inlet region 13, a curved panel, and so on. The present disclosure is not limited to any of these examples.

Of course, the present disclosure is not limited in this regard. The position of the shield 2 may be unfixed. For example, in some embodiments, a position or a shape of at least one shield 2 is variable, in such a manner that other design requirements can be met.

For example, as illustrated in FIG. 5, the at least one shield 2 is deformable or movable in a direction of entry of the inlet region 13 corresponding to the at least one shield 2. In this way, when the shield 2 blocks the flames, the communication channel R can be enlarged through changing the position or the shape of the shield 2. Therefore, the exhaust emission efficiency can be increased to improve the safety.

Specifically, the above-described at least one shield 2 can be moved in various ways. For example, the at least one shield 2 may be driven to move or automatically moved. For example, in some specific examples, as illustrated in FIG. 5 and FIG. 6, the discharge assembly 10 includes a support member 4. The support member 4 is configured to support the shield 2 whose position is variable. The support member 4 is constructed to be meltable at a temperature of the discharge, to enable the position of the shield 2 corresponding to the support member 4 to be variable. For example, the support member 4 may be disposed between the support beam 16 and the shield 2. When the shield 2 blocks the flames in the discharge, the support member 4 is meltable, to enable the position of the shield 2 to be variable. Therefore, the exhaust space can be enlarged to improve the exhaust emission efficiency. It should be noted that the support member 4 may be made of any material, e.g., foam.

For example, as illustrated in FIG. 27, the at least one shield 2 is movable in a direction in which a plurality of inlet regions 13 on one wall surface 12 is arranged at intervals, to selectively shield different inlet regions 13. In this way, in the event of thermal runaway, the shield 2 can be positioned to the inlet region 13 where the discharge enters, to block the flames. Therefore, a quantity of shields 2 can be reduced to lower costs of the shields 2.

Specifically, the above-described at least one shield 2 can be moved in various ways. For example, the at least one shield 2 may be driven to move or automatically moved. For example, in some specific examples, as illustrated in FIG. 27, the discharge assembly 10 includes a driver 3 configured to drive the at least one shield 2 that is movable. Optionally, the driver 3 may be connected to a monitoring system. The monitoring system is capable of monitoring which battery cell 200 is to discharge the discharge. Therefore, the driver 3 is capable of driving, based on a monitoring result, the shield 2 to move to a corresponding position. Details thereof will be omitted here. A specific composition of the driver 3 is not limited and can be flexibly selected, as long as the shield 2 can be driven to move.

In some embodiments of the present disclosure, as illustrated in FIG. 32, the discharge assembly 10 may further include a barrier 5 disposed in the discharge cavity 11 and located between two adjacent inlet regions 13 at one side. Therefore, a problem of flame spread between the two adjacent inlet regions 13 can be avoided. It should be noted that the barrier 5 described here at least has a fire protection function.

It should be noted that the function of the discharge member 1 according to the embodiments of the present disclosure is not limited to any of these examples. For example, in some embodiments of the present disclosure, the discharge member 1 may further include a heat exchanger. The heat exchanger is configured to exchange heat with at least one of the battery cell 200 and the discharge cavity 11, to dissipate heat for the at least one of the battery cell 200 and the discharge cavity 11, realizing a cooling effect and reducing a probability of heat spread. Therefore, the discharge member 1 has a heat dissipation function while ensuring an exhaust emission function.

For example, the heat exchanger may include a heat exchange cavity. The heat exchange cavity may be filled with a flowable heat exchange fluid. The heat exchange fluid can flow in the heat exchange cavity, and continuously exchange heat with the discharge in the discharge cavity 11 relying on fluidity to take away heat gathered in the discharge cavity 11. Therefore, a probability of heat concentration is reduced, which improves the safety and reduces the probability of heat spread.

For example, as illustrated in FIG. 3 to FIG. 6, the discharge member 1 may include the support beam 16 and a cold plate 17 disposed outside the support beam 16. The shield 2 is disposed at the support beam 16 or between the support beam 16 and the cold plate 17. The discharge cavity 11 is defined in the support beam 16 or between the support beam 16 and the shield 2. The cold plate 17 has the inlet region 13 in communication with the discharge cavity 11. The heat exchange cavity is formed in the cold plate 17. For example, the cold plate 17 is disposed at each of two sides of the support beam 16 in a width direction Y of the support beam 16. The battery cell 200 is disposed at a side of each cold plate 17 facing away from the support beam 16. For example, the battery cells 200 are arranged in a single row or multiple rows at an outer side of the cold plate 17. The discharge cavity 11 is located at an inner side of the cold plate 17.

Therefore, the discharge member 1 is arranged in layers, which facilitates processing and manufacturing, and can enlarge an area of heat exchange between the heat exchange cavity and the battery cell 200. Also, an area of heat conduction between the heat exchange cavity and the discharge cavity 11 can be enlarged, which is conducive to improving a heat dissipation and cooling effect. The cold plate 17 can also separate the discharge cavity 11 from the battery cell 200 to prevent the high-temperature discharge from exerting an adverse thermal impact on the battery cell 200. In addition, the battery cells 200 at two sides of the discharge member 1 in the width direction Y of the discharge member 1 share one discharge member 1, which can improve structural compactness.

A casing 100 according to an embodiment in a second aspect of the present disclosure is described below with reference to the accompanying drawings.

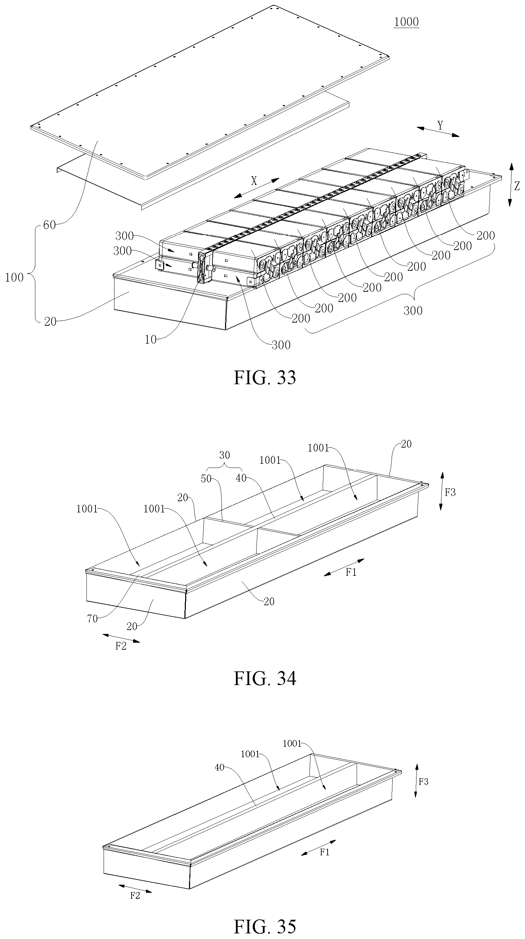

As illustrated in FIG. 33 to FIG. 36, the casing 100 according to the embodiment of the present disclosure has an accommodation cavity 1001 configured to accommodate the battery cell 200. That is, the battery cell 200 may be disposed in the accommodation cavity 1001. The casing 1000 includes the discharge assembly 10 according to the embodiment in the first aspect of the present disclosure. Therefore, since the discharge assembly 10 is disposed at the casing 100 according to the embodiment of the present disclosure, the discharge generated by the battery cell 200, such as the flames, the smoke, or the gas, can enter the discharge member 1 through the inlet region 13 when thermal runaway occurs. With the blocking of the shield 2, the flames in the discharge can be effectively isolated to alleviate the thermal diffusion problem. As a result, the thermal diffusion is prevented from causing other battery cells 200 to be affected by thermal runaway, effectively avoiding the secondary damage.

In addition, by integrating the discharge assembly 10 into the casing 100, the discharge assembly 10 is also able to serve as a part of a reinforcement structure of the casing 100 while realizing the exhaust emission function. For example, the discharge assembly 10 may serve as a beam of the casing 100 to reduce, or even remove, some of the beam structures of the casing 100. Therefore, the battery 1000 adopting the casing 100 has a higher space utilization rate, a more compact structure, and a higher energy density. It should be noted that, the discharge assembly 10 can be positioned at any part of the casing 100. As an example, some embodiments are described below.

For example, as illustrated in FIG. 33 to FIG. 36, the casing 100 includes a frame 20 and a dividing beam 30. The dividing beam 30 is located in a space defined by the frame 20 to divide the space into a plurality of accommodation cavities 1001. At least one of the frame 20 and the dividing beam 30 is constructed as the discharge assembly 10. In this case, the battery cell 200 may be disposed at a horizontal side of the discharge assembly 10. The discharge may be discharged by the battery cell 200 in a horizontal direction during thermal runaway.

In addition, when the battery cell 200 is disposed at each of two sides of the dividing beam 30 and the dividing beam 30 is constructed as the discharge assembly 10, the battery cells 200 at the two sides may share the discharge assembly 10 to reduce a quantity of discharge assemblies 10, lower the costs, and improve a discharge efficiency. Also, the structural compactness can be improved, which in turn increases the energy density.

For example, as illustrated in FIG. 35, the dividing beam 30 includes a longitudinal beam 40 extending in a length direction F1 of the casing 100 (but includes no transverse beam 50 extending in a width direction F2 of the casing 100). The longitudinal beam 40 is constructed as the discharge assembly 10.

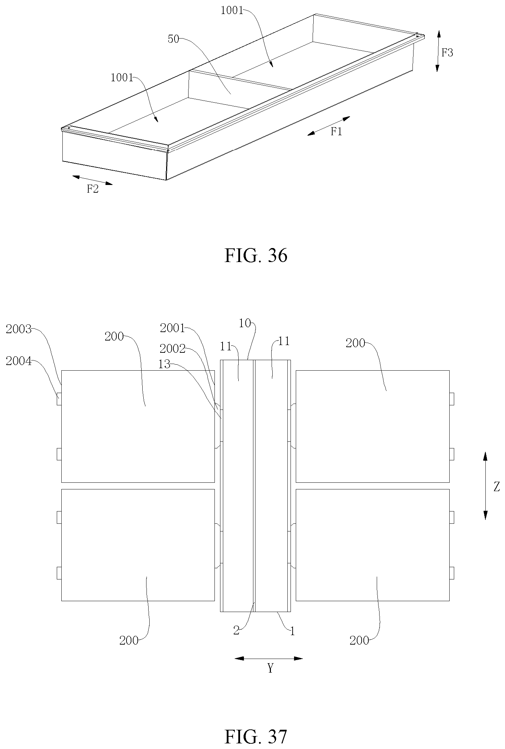

For example, as illustrated in FIG. 36, the dividing beam 30 includes the transverse beam 50 extending in the width direction F2 of the casing 100 (but includes no longitudinal beam 40 extending in the length direction F1 of the casing 100). The transverse beam 50 is constructed as the discharge assembly 10.

For example, as illustrated in FIG. 34, the dividing beam 30 includes the longitudinal beam 40 extending in the length direction F1 of the casing 100 and the transverse beam 50 extending in the width direction F2 of the casing 100. At least one of the longitudinal beam 40 and the transverse beam 50 is constructed as the discharge assembly 10.

For example, as illustrated in FIG. 33, the casing 100 includes a top cover 60 ( but includes no bottom plate 70). The top cover 60 includes the discharge assembly 10. In this case, the battery cell 200 may be located below the discharge assembly 10. The discharge may be discharged by the battery cell 200 upwards during thermal runaway.

For example, as illustrated in FIG. 33 and FIG. 34, the casing 100 includes the bottom plate 70 (but includes no top cover 60). The bottom plate 70 includes the discharge assembly 10. In this case, the battery cell 200 may be located above the discharge assembly 10. The discharge may be discharged by the battery cell 200 downwards during thermal runaway.

For example, as illustrated in FIG. 33 and FIG. 34, the casing 100 includes the top cover 60 and the bottom plate 70. At least one of the top cover 60 and the bottom plate 70 includes the discharge assembly 10.

For example, the casing 100 includes the frame 20, the dividing beam 30, the top cover 60, and the bottom plate 70 simultaneously. At least two of the frame 20, the dividing beam 30, the top cover 60, and the bottom plate 70 each include the discharge assembly 10.

Therefore, the discharge assembly 10 can be designed flexibly, which meets design requirements of different casings 100 and realizes a wide range of applications.

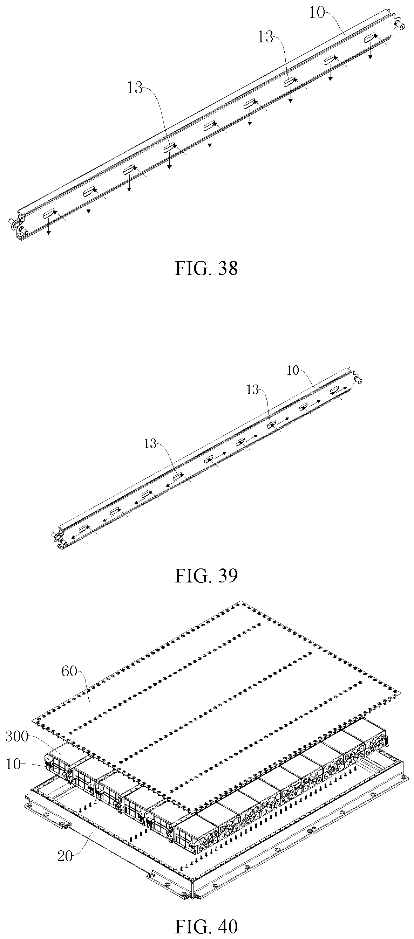

Further, in the embodiments of the present disclosure, when the dividing beam 30 is constructed as the discharge assembly 10 and includes a discharge path, at least one of the frame 20, the top cover 60, and the bottom plate 70 may have an outflow path. The discharge path is in communication with the outflow path, in such a manner that the discharge can be discharged. For example, as illustrated in FIG. 38, when the dividing beam 30 is constructed as the discharge assembly 10, the discharge entering the discharge assembly 10 may be discharged downwards towards the bottom plate 70. For example, as illustrated in FIG. 39 to FIG. 41, when the dividing beam 30 is constructed as the discharge assembly 10, the discharge entering the discharge assembly 10 may be discharged towards the frame 20 in the length direction of the discharge assembly 10.

A battery 1000 according to an embodiment in a third aspect of the present disclosure is described below with reference to the accompanying drawings.

As illustrated in FIG. 33 and FIG. 34, the battery 1000 according to the embodiment of the present disclosure includes the casing 100 according to the embodiment in the second aspect of the present disclosure and the plurality of battery cells 200. The plurality of battery cells 200 is disposed in the accommodation cavity 1001. Therefore, for the battery 1000 according to the embodiment of the present disclosure, since the discharge assembly 10 is disposed at the casing 100, the discharge generated by the battery cell 200, such as the flames, the smoke, or the gas, can enter the discharge member 1 through the inlet region 13 when thermal runaway occurs. With the blocking of the shield 2, the flames in the discharge can be effectively isolated to alleviate the thermal diffusion problem. As a result, the thermal diffusion is prevented from causing other battery cells 200 to be affected by thermal runaway, effectively avoiding the secondary damage.

In some embodiments of the present disclosure, the casing 100 includes the dividing beam 30 dividing a space in the casing 100 into a plurality of accommodation cavities 1001. The dividing beam 30 is constructed as the discharge assembly 10. Therefore, the discharge assembly 10 may have an elongated beam structure. A length direction of the dividing beam 30 is the length direction X of the discharge assembly 10. A width direction of the dividing beam 30 is the width direction Y of the discharge assembly 10. A height direction of the dividing beam 30 is the height direction Z of the discharge assembly 10. The height direction Z, the width direction Y, and the length direction X are pairwise perpendicular to each other. For example, when the battery 1000 is applied in a vehicle, the length direction X and the width direction Y may both be arranged horizontally, while the height direction Z may be arranged vertically.

In some embodiments, as illustrated in FIG. 33, a battery row 300 is disposed at at least one side of the discharge assembly 10 in the width direction Y of the discharge assembly 10. The battery row 300 includes the plurality of battery cells 200 sequentially arranged in the length direction X of the discharge assembly 10. Each of the plurality of battery cells 200 is configured to discharge the discharge towards an exhaust path separately. Therefore, a simple arrangement scheme is realized. The discharge assembly 10 can be used for discharge actions of the plurality of battery cells 200 in the event of thermal runaway. The battery 1000 has better structural compactness and higher energy density. It should be noted that the plurality of battery cells 200 in the battery row 300 may be connected in parallel and/or in series. The present disclosure is not limited in this regard.

In some specific examples, as illustrated in FIG. 33, the battery row 300 is disposed at each of two sides of the discharge assembly 10 in the width direction Y of the discharge assembly 10. Therefore, the battery rows 300 at the two sides can share one discharge assembly 10, which makes the structure compact, improving the space utilization rate and increasing the energy density of the battery 1000.

For example, optionally, as illustrated in FIG. 33, when the battery row 300 is disposed at each of the two sides of the discharge assembly 10 in the width direction Y of the discharge assembly 10, the battery rows 300 at the two sides of the discharge assembly 10 in the width direction Y are directly opposite to each other in the length direction X of the discharge assembly 10. That is, a plurality of battery cells 200 in the battery row 300 at one of the two sides of the discharge assembly 10 is directly opposite to a plurality of battery cells 200 in the battery row 300 at the other one of the two sides of the discharge assembly 10 in a one-to-one correspondence in the width direction Y of the discharge assembly 10. Therefore, the space utilization rate can be further improved, and the energy density of the battery 1000 can be increased.

Optionally, when the battery row 300 is disposed at each of the two sides of the discharge assembly 10 in the width direction Y of the discharge assembly 10, the battery rows 300 at the two sides of the discharge assembly 10 in the width direction Y are offset from each other in the length direction X of the discharge assembly 10. That is, the plurality of battery cells 200 in the battery row 300 at the one of the two sides of the discharge assembly 10 is diagonally opposite to the plurality of battery cells 200 in the battery row 300 at the other one of the two sides of the discharge assembly 10 in a one-to-one correspondence in the width direction Y of the discharge assembly 10. Therefore, the problem of opposite spraying during thermal runaway can be effectively avoided.

In some specific examples, as illustrated in FIG. 33, a plurality of battery rows 300 is disposed at the at least one side of the discharge assembly 10 in the width direction Y of the discharge assembly 10. The plurality of battery rows 300 is sequentially arranged in the height direction Z of the discharge assembly 10. Therefore, the discharge assembly 10 can be used for the discharge actions of a larger quantity of battery cells 200, which further improves the structural compactness and the space utilization rate and increases the energy density of the battery 1000.

Optionally, for example, as illustrated in FIG. 33, a plurality of battery rows 300 at a same side in the width direction Y is directly opposite to each other in the length direction X of the discharge assembly 10. That is, a plurality of battery cells 200 in one of the plurality of battery rows 300 at the same side is directly opposite to a plurality of battery cells 200 in another one of the plurality of battery rows 300 at the same side in a one-to-one correspondence in the height direction Z of the discharge assembly 10. Therefore, the space utilization rate can be further improved, and the energy density of the battery 1000 can be increased.

Optionally, the plurality of battery rows 300 at the same side in the width direction Y is offset from each other in the length direction X of the discharge assembly 10. That is, the plurality of battery cells 200 in one of the plurality of battery rows 300 at the same side is diagonally opposite to the plurality of battery cells 200 in the other of the plurality of battery rows 300 at the same side in a one-to-one correspondence in the height direction Z of the discharge assembly 10. Details thereof will be omitted here.

When the plurality of battery rows 300 is disposed at the at least one side of the discharge assembly 10 in the width direction Y of the discharge assembly 10 and sequentially arranged in the height direction Z of the discharge assembly 10, in some embodiments, as illustrated in FIG. 33, the thickness direction of the battery cell 200 is identical to the height direction Z of the discharge assembly 10. In this way, more battery rows 300 can be accommodated in the height direction Z of the discharge assembly 10, which can further improve the space utilization rate, and increase the energy density of the battery 1000, effectively avoiding a risk of safety failure brought about by the battery 1000 having a high energy density.

In addition, with the above-described arrangement, a height of the battery cell 200 relative to the casing 100 can also be reduced to lower a height of a discharge position (e.g., an explosion-proof valve or the weak portion) of the battery cell 200 relative to the casing 100, which in turn can effectively reduce a height at which the battery cell 200 discharges the discharge. Therefore, the discharge has a smaller influence range in the height direction Z, which reduces a diffusion region and improves the overall safety performance of the battery 1000.

It should be noted that the quantity of battery rows 300 disposed at the same side in the width direction Y is not limited. For example, the quantity of battery rows 300 may be less than a quantity of battery cells 200 included in each battery row 300. For example, one, two, or three battery rows 300 may be provided. Therefore, a compression force caused by battery rows 300 of a large quantity can be mitigated to reduce an external compression force exerted on the battery cells 200, which in turn reduces an intensity of a rupture event of the battery cell 200, improving the safety performance. In addition, when the heat exchanger is disposed at a side surface of the discharge assembly 10 in the width direction Y of the discharge assembly 10, such an arrangement of the battery cells 200 allows a heat exchange assembly to cool and dissipate heat for a larger quantity of battery cells 200 simultaneously.

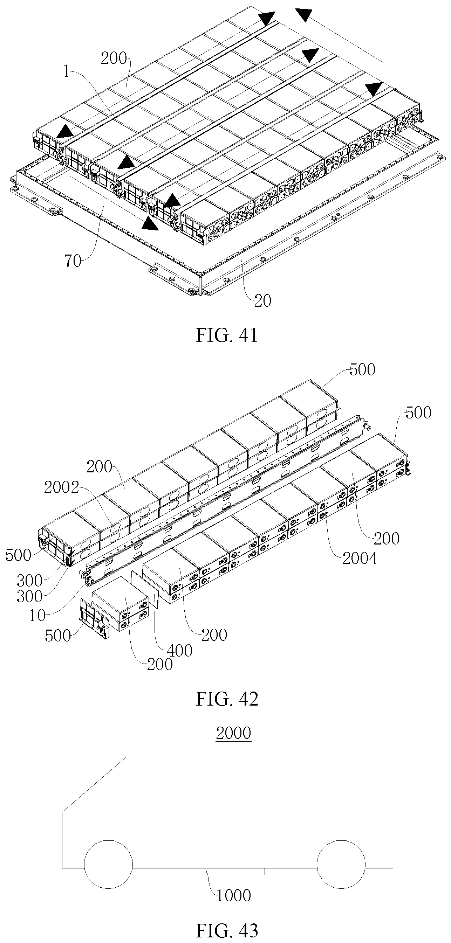

In some embodiments of the present disclosure, as illustrated in FIG. 37 and FIG. 42, a side wall surface of the battery cell 200 facing towards the discharge assembly 10 is a first end face 2001. The first end face 2001 has the pressure relief region 2002. For example, the pressure relief region 2002 may be the explosion-proof valve, the weak portion, or the like. In the event of thermal runaway, the battery cell 200 may break through the pressure relief region 2002 to discharge the discharge into the discharge assembly 10. By enabling the pressure relief region 2002 to face towards the discharge assembly 10, the discharge path can be shortened to reduce the secondary damage caused by an impact of the high-temperature discharge on other battery cells 200, improving the safety.

In some embodiments, as illustrated in FIG. 37, the battery cell 200 has an electrical connection terminal 2004 disposed at a wall surface of the battery cell 200 other than the first end face 2001. For example, the electrical connection terminal 2004 may be a tab, an electrode terminal, or the like. Therefore, forming the electrical connection terminal 2004 and the pressure relief region 2002 on different wall surfaces can extend a distance between the electrical connection terminal 2004 and the pressure relief region 2002, reducing an adverse thermal impact exerted on the electrical connection terminal 2004 by the discharge sprayed from the pressure relief region 2002 and lowering a probability of insulation failure.

For example, in a specific example, as illustrated in FIG. 37, a side wall surface of the battery cell 200 facing away from the discharge assembly 10 is a second end face 2003. The electrical connection terminal 2004 of the battery cell 200 is disposed at the second end face 2003. That is, the pressure relief region 2002 and the electrical connection terminal 2004 are located at two opposite sides of the battery cell 200, respectively, and the electrical connection terminal 2004 faces away from the discharge assembly 10. Therefore, the distance between the electrical connection terminal 2004 and the pressure relief region 2002 can be further extended to reduce the adverse thermal impact exerted on the electrical connection terminal 2004 by the discharge sprayed from the pressure relief region 2002 and lowering the probability of insulation failure.

In addition, in some examples, when the battery cell 200 is formed as a bare cell through winding, formations of the electrical connection terminal 2004 and the pressure relief region 2002 at two axial ends in a winding direction, respectively, are facilitated, which can shorten a lead-out path of the electrical connection terminal 2004 and make exhaust emissions smoother.

In some embodiments, as illustrated in FIG. 37, the first end face 2001 and the second end face 2003 are end faces at two sides of the battery cell 200 in a length direction of the battery cell 200. When the length direction X of the battery cell 200 extends horizontally and a thickness direction of the battery cell 200 extends vertically and is the height direction F3 of the battery 1000, the electrical connection terminal 2004 of the battery cell 200 is disposed at the second end face 2003, while the pressure relief region 2002 is disposed at the first end face 2001, which can reduce the space utilization rate of the battery cell 200 in the height direction F3 of the battery 1000 to realize a more compact structure of the entire battery 1000 in the height direction Z, facilitating a reduction of an overall height of the battery 1000. When the battery 1000 is mounted at a chassis of the vehicle, addressing a problem related to ground clearance of the chassis can be facilitated to reduce occurrences of a problem that the battery is likely to be bumped and scratched due to the chassis of the vehicle being too low. Therefore, the battery 1000 can have a longer service life.

In addition, when the heat exchanger is disposed at a side of the discharge assembly 10 facing towards the battery cell 200, and a cooling medium circulates in the heat exchanger, the pressure relief region 2002 of the battery cell 200 and the discharge can be effectively cooled down by the heat exchanger to reduce a probability of spread of thermal runaway. Further, in the event of a leakage of the cooling medium, a position where the leakage occurs is far away from the electrical connection terminal 2004 of the battery cell 200, which achieves relatively high safety.

Of course, the present disclosure is not limited in this regard. When the pressure relief region 2002 is formed at an end of the battery cell 200 in the length direction of the battery cell 200, as an example, the electrical connection terminal 2004 of the battery cell 200 can be disposed at a side wall surface of the battery cell 200 in the thickness direction of the battery cell 200, to reduce a difficulty of an electrical connection.

Further, the present disclosure is not limited in this regard. In some embodiments, the electrical connection terminal 2004 of the battery cell 200 may also be disposed at the first end face 2001 simultaneously. That is, the electrical connection terminal 2004 and the pressure relief region 2002 are located at a same side of the battery cell 200. In this case, an insulating member may be disposed between the electrical connection terminal 2004 and the discharge assembly 10 to avoid a problem of insulation failure caused by the discharge.

In some embodiments of the present disclosure, the battery cell 200 may be fixed in any manner. For example, the battery cell 200 may be mounted at the discharge assembly 10 to facilitate mounting of the battery cell 200. In addition, reliability of the discharge from the battery cell 200 to the discharge assembly 10 can be ensured to improve the safety. It should be noted that the battery cell 200 and the discharge assembly 10 may be connected in any manner. For example, the battery cell 200 may be directly adhered to the discharge member 1 to improve a connection efficiency.

It should be noted that a specific composition of the battery 1000 according to the embodiments of the present disclosure is not limited in this regard. For example, as illustrated in FIG. 42, the battery 1000 may further include a thermal insulator 400 disposed between every two adjacent battery cells 200 in the battery row 300, an end plate 500 disposed at each of two ends of the battery row 300 in a length direction of the battery row 300, etc. Details thereof will be omitted here. Further, it should be noted that quantities and arrangements of the dividing beam 30, the battery row 300, and the like included in the battery 100 according to the embodiments of the present disclosure are not limited and can be specifically determined as desired, details thereof will be omitted here.

A battery 1000 according to an embodiment in a fourth aspect of the present disclosure is described below with reference to the accompanying drawings.

As illustrated in FIG. 3 and FIG. 4, the battery 1000 includes a discharge member 1, a battery row 300, and a shield 2.

The discharge member 1 has an elongated structure. A discharge cavity 11 is formed in the discharge member 1. The discharge member 1 has an inlet region 13 formed on each of two side wall surfaces 12 of the discharge member 1 in a width direction of the discharge member 1. The discharge cavity 11 is adapted to receive a discharge from a battery cell 200 through the inlet region 13.

The battery row 300 is disposed at each of two sides of the discharge assembly 1 in the width direction of the discharge member 1. The battery row 300 includes a plurality of battery cells 200 sequentially arranged in a length direction of the discharge member 1. Each of the plurality of battery cells 200 has a pressure relief region 2002 at a side of the battery cell 200 facing towards the discharge member 1. Each battery cell 200 is disposed corresponding to one pressure relief region 2002.

The shield 2 is disposed in the discharge member 1, and is spaced apart from the wall surface 12 and configured to shield the inlet region 13 to at least block flames in the discharge. A communication channel R in communication with the inlet region 13 and the discharge cavity 11 is formed between the shield 2 and the wall surface 12 to allow a gas in the discharge to enter the discharge cavity 11.

It should be noted that, that "spaced apart from the wall surface 12" means being spaced apart from the wall surface 12 in a thickness direction of the wall surface 12.

When thermal runaway occurs, the discharge generated by the battery cell 200, such as the flames, the smoke, or the gas, can enter the discharge member 1 through the inlet region 13. With the blocking of the shield 2, the flames in the discharge can be effectively isolated to alleviate the thermal diffusion problem. Therefore, the thermal diffusion is prevented from causing other battery cells 200 to be affected by thermal runaway, effectively avoiding the secondary damage.

In addition, since the shield 2 is located in the discharge member 1, the shield 2 occupies no space outside the discharge member 1, which enables the compact arrangement between the discharge member 1 and the battery cell 200. Moreover, the shield 2 located in the discharge member 1 can be protected by the discharge member 1 and is therefore less likely to fall off, be damaged by bumping, etc., enhancing protection reliability of the shield 2. In addition, disposing the shield 2 in the discharge member 1 requires no modification of the battery cell 200, which ensures the energy density of the battery cell 200.

It should be noted that the battery 1000 according to the embodiment in the fourth aspect of the present disclosure may or may not include a conventional casing. Further, it should be noted that, reference to specific optional embodiments of the shield 2 in the battery 1000 according to the embodiment in the fourth aspect of the present disclosure can be made to the embodiments of the shield 2 in the discharge assembly 10 according to the embodiment in the first aspect of the present disclosure, without contradiction, and reference to specific optional embodiments of the battery cell 200 in the battery 1000 according to the embodiment in the fourth aspect of the present disclosure can be made to the embodiments of the battery cell 200 in the battery 1000 according to the embodiment in the third aspect of the present disclosure, without contradiction. Details thereof will be omitted here for simplicity.

An electric device 2000 according to an embodiment in a fifth aspect of the present disclosure is described below with reference to the accompanying drawings.

As illustrated in FIG. 43, the electric device 2000 according to the embodiment of the present disclosure includes the battery 1000 according to any of the embodiments of the present disclosure. The battery 1000 is configured to supply electrical energy for the electric device 2000. Therefore, safety of the electric device 2000 can be improved.

It should be noted that the type of the electric device 2000 according to the embodiments of the present disclosure is not limited. For example, the electric device 2000 may be a vehicle, a cell phone, a portable device, a laptop computer, a ship, a spacecraft, an electric toy, an electric tool, and the like. The vehicle may be a fuel vehicle, a gas vehicle, or a new energy vehicle. The new energy vehicle may be a pure electric vehicle, a hybrid electric vehicle, a plug-in hybrid electric vehicle, etc. The spacecraft includes an airplane, a rocket, a space shuttle, a spaceship, or the like. The electric toy includes a fixed electric toy or a mobile electric toy, e.g., a game console, an electric car toy, an electric ship toy, and an electric airplane toy. The electric tool includes an electric metallic cutting tool, an electric grinding tool, an electric assembly tool, and an electric railroad-specific tool, e.g., an electric drill, an electric grinder, an electric wrench, an electric screwdriver, an electric hammer, an electric impact drill, a concrete vibrator, and an electric planer.

For example, as illustrated in FIG. 43, when the battery 1000 is applied in the vehicle, the battery 1000 may be disposed at a bottom or a head or a tail of the vehicle. The battery 1000 can be configured to supply power to the vehicle. For example, the battery 1000 may serve as an operation power source for the vehicle. The vehicle may further include a controller and a motor. The controller is configured to control the battery 1000 to supply power to the motor, e.g., for meeting operational power needs of starting, navigation, and driving of the vehicle. In some embodiments of the present disclosure, the battery 1000 can not only serve as an operational power source for the vehicle, but also serve as a drive power source for the vehicle to provide drive power for the vehicle in lieu of, or partially in lieu of, fuel oil or natural gas.

In the description of the embodiments of the present disclosure, it should be understood that, the orientation or the position indicated by technical terms such as "center", "longitudinal", "lateral", "length", "width", "thickness", "over", "below", "front", "rear", "left", "right", "vertical", "horizontal", "top", "bottom", "inner", and "outer" should be construed to refer to the orientation or the position as shown in the drawings, and is only for the convenience of describing the embodiments of the present disclosure and simplifying the description, rather than indicating or implying that the pointed device or element must have a specific orientation, or be constructed and operated in a specific orientation, and therefore cannot be understood as a limitation of the present disclosure.

In addition, terms such as "first", "second", and "third" are only used for descriptive purposes, and cannot be understood as indicating or implying relative importance or implicitly indicating the number of indicated technical features. Therefore, the features associated with "first", "second", "third", or the like may explicitly or implicitly include at least one of the features. In the description of the present disclosure, "plurality" means at least two, unless otherwise specifically defined.

In the present disclosure, unless otherwise clearly specified and limited, terms such as "install", "connect", "connect to", "fix" and the like should be understood in a broad sense. For example, it may be a fixed connection or a detachable connection or connection as one piece; mechanical connection or electrical connection or communication; direct connection or indirect connection through an intermediate; internal communication of two components or the interaction relationship between two components. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

Throughout this specification, description with reference to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Further, the particular features, structures, materials, or characteristics described here may be combined in any suitable manner in one or more embodiments or examples. In addition, different embodiments or examples and features of different embodiments or examples described in the specification may be combined by those skilled in the art without mutual contradiction.

Although embodiments of the present disclosure have been illustrated and described, it is conceivable for those of ordinary skill in the art that various changes, modifications, replacements, and variations can be made to these embodiments without departing from the principles and spirit of the present disclosure. The scope of the present disclosure shall be defined by the claims as appended and their equivalents.

## Claims

1. A discharge assembly, comprising:
a discharge member having a discharge cavity, the discharge member having an inlet region formed on a wall surface of the discharge member, and the discharge cavity being adapted to receive a discharge from a battery cell through the inlet region; and
a shield disposed in the discharge member, the shield being adapted to shield the inlet region in a shielding state to at least block flames in the discharge, and adapted to form a communication channel in communication with the inlet region and the discharge cavity to allow a gas in the discharge to enter the discharge cavity.

2. The discharge assembly according to claim 1, wherein:
the discharge member has a first wall surface;
the inlet region comprises a plurality of first inlet regions formed on the first wall surface; and
the shield comprises a first shield, the first shield being spaced apart from the first wall surface in the shielding state, and an orthographic projection of the first shield on the first wall surface covering the plurality of first inlet regions.

3. The discharge assembly according to claim 2, wherein:
a plurality of first shields is provided and arranged at intervals; and
the plurality of first inlet regions is shielded by the plurality of first shields in a one-to-one correspondence.

4. The discharge assembly according to claim 2, wherein at least two adjacent first inlet regions of the plurality of first inlet regions are shielded by one first shield.

5. The discharge assembly according to claim 4, wherein the plurality of first inlet regions is shielded by one first shield.

6. The discharge assembly according to claim 4, wherein a first inlet row is defined by multiple first inlet regions of the plurality of first inlet regions arranged in a length direction of the discharge member, the multiple first inlet regions in the first inlet row being shielded by one first shield.

7. The discharge assembly according to claim 6, wherein:
a plurality of first inlet rows is defined on the first wall surface and arranged in a height direction of the discharge member; and
the first shields corresponding to the plurality of first inlet rows are arranged at intervals in the height direction of the discharge member.

8. The discharge assembly according to claim 4, wherein:
a first inlet column is defined by multiple first inlet regions of the plurality of first inlet regions arranged in a height direction of the discharge member, the multiple first inlet regions in the first inlet column being shielded by one first shield.

9. The discharge assembly according to claim 8, wherein:
a plurality of first inlet columns is defined on the first wall surface and arranged in a length direction of the discharge member; and
the first shields corresponding to the plurality of first inlet columns are arranged at intervals in the length direction of the discharge member.

10. The discharge assembly according to any one of claims 4 to 9, wherein:
the first shield has a first through hole; and
an orthographic projection of the first through hole on the first wall surface is offset from the first inlet region.

11. The discharge assembly according to any one of claims 2 to 9, wherein:
the discharge member has a second wall surface;
the inlet region comprises a plurality of second inlet regions formed on the second wall surface; and
the first shield is spaced apart from the second wall surface in the shielding state, an orthographic projection of the first shield on the second wall surface covering the plurality of second inlet regions.

12. The discharge assembly according to claim 11, wherein:
the second wall surface and the first wall surface are two opposite side walls of the discharge member; and
the first shield is located between the first wall surface and the second wall surface.

13. The discharge assembly according to claim 12, wherein:
the second wall surface and the first wall surface are two side walls of the discharge member in a width direction of the discharge member; and
the first shield is located at a central position between the first wall surface and the second wall surface.

14. The discharge assembly according to any one of claims 11 to 13, wherein:
the first shield has a first through hole;
an orthographic projection of the first through hole on the first wall surface is offset from the first inlet region; and
an orthographic projection of the first through hole on the second wall surface is offset from the second inlet region.

15. The discharge assembly according to any one of claims 2 to 9, wherein:
the discharge member has a second wall surface;
the inlet region comprises a plurality of second inlet regions formed on the second wall surface;
the shield comprises a second shield; and
the second shield is spaced apart from the second wall surface in the shielding state, an orthographic projection of the second shield on the second wall surface covering the plurality of second inlet regions.

16. The discharge assembly according to claim 15, wherein:
the second wall surface and the first wall surface are two opposite side walls of the discharge member; and
the second shield is disposed at a side of the first shield close to the second wall surface.

17. The discharge assembly according to claim 16, wherein the second shield is spaced apart from the first shield, to define at least a part of the discharge cavity between the first shield and the second shield.

18. The discharge assembly according to any one of claims 15 to 17, wherein
a plurality of second shields is provided and arranged at intervals; and
the plurality of second inlet regions is shielded by the plurality of second shields in a one-to-one correspondence.

19. The discharge assembly according to any one of claims 15 to 17, wherein at least two adjacent second inlet regions of the plurality of second inlet regions are shielded by one second shield.

20. The discharge assembly according to claim 19, wherein:
the second shield has a second through hole; and
an orthographic projection of the second through hole on the second wall surface is offset from the second inlet region.

21. The discharge assembly according to claim 20, wherein:
the first shield has a first through hole; and
an orthographic projection of the first through hole on the first wall surface is offset from the first inlet region.

22. The discharge assembly according to claim 21, wherein:
the second wall surface and the first wall surface are two side walls of the discharge member in a width direction of the discharge member;
a support beam extending in a length direction of the discharge member is disposed in the discharge member;
the first shield is disposed at a side of the support beam facing towards the first wall surface;
the second shield is disposed at a side of the support beam facing towards the second wall surface; and
the support beam has a third through hole.

23. The discharge assembly according to any one of claims 1 to 22, wherein a position of at least one shield is fixed.

24. The discharge assembly according to claim 23, wherein a support beam is disposed in the discharge member, the shield being fixedly disposed at the support beam.

25. The discharge assembly according to claim 24, wherein the shield has a shape matching a shape of a wall surface of the support beam at corresponding positions.

26. The discharge assembly according to any one of claims 1 to 22, wherein a position or a shape of at least one shield is variable.

27. The discharge assembly according to claim 26, wherein the at least one shield is deformable or movable in a direction of entry of the inlet region corresponding to the at least one shield.

28. The discharge assembly according to claim 27, further comprising:
a support member configured to support the shield whose position is variable, the support member being constructed to be meltable at a temperature of the discharge, to enable the position of the shield corresponding to the support member to be variable.

29. The discharge assembly according to claim 26, wherein the at least one shield is movable in a direction in which a plurality of inlet regions on one wall surface is arranged at intervals, to selectively shield different inlet regions.

30. The discharge assembly according to claim 29, further comprising:
a driver configured to drive the at least one shield that is movable.

31. The discharge assembly according to claim 1, wherein:
in the shielding state, the shield is spaced apart from the wall surface forming the inlet region, to form the communication channel between the shield and the wall surface, the communication channel being in communication with the discharge cavity at an edge of the shield; and/or
the shield has a through hole offset from the inlet region, the communication channel being in communication with the discharge cavity through the through hole.

32. The discharge assembly according to claim 1, wherein:
the shield is a hollow housing to form the communication channel in the shield;
a peripheral side wall of the shield has an opening to enable the communication channel to be in communication with the discharge cavity; and
the shield is attached to the wall surface forming the inlet region and enables the communication channel to be in communication with the inlet region.

33. The discharge assembly according to any one of claims 1 to 32, wherein the shield is a fireproof member.

34. The discharge assembly according to claim 33, wherein:
the fireproof member is a fireproof plate; or
the fireproof member comprises a substrate and a fireproof layer disposed outside the substrate.

35. The discharge assembly according to any one of claims 1 to 34, further comprising:
a barrier disposed in the discharge cavity and located between two adjacent inlet regions at one side.

36. The discharge assembly according to any one of claims 1 to 35, being applied in a battery comprising at least one battery cell.

37. A casing, having an accommodation cavity configured to accommodate a battery cell, the casing comprising the discharge assembly according to any one of claims 1 to 36.

38. The casing according to claim 37, further comprising:
a frame; and
a dividing beam located in a space defined by the frame to divide the space into a plurality of accommodation cavities, at least one of the frame and the dividing beam being constructed as the discharge assembly.

39. The casing according to claim 38, wherein:
the dividing beam comprises a longitudinal beam extending in a length direction of the casing, the longitudinal beam being constructed as the discharge assembly; or
the dividing beam comprises a transverse beam extending in a width direction of the casing, the transverse beam being constructed as the discharge assembly; or
the dividing beam comprises a longitudinal beam extending in a length direction of the casing and a transverse beam extending in a width direction of the casing, at least one of the longitudinal beam and the transverse beam being constructed as the discharge assembly.

40. The casing according to any one of claims 37 to 39, wherein:
the casing comprises a top cover comprising the discharge assembly; or
the casing comprises a bottom plate comprising the discharge assembly; or
the casing comprises a top cover and a bottom plate, at least one of the top cover and the bottom plate comprising the discharge assembly.

41. A battery, comprising:
the casing according to claim 36; and
a plurality of battery cells disposed in the accommodation cavity.

42. The battery according to claim 41, wherein:
the casing comprises a dividing beam dividing a space in the casing into a plurality of accommodation cavities, the dividing beam being constructed as the discharge assembly;
a battery row is disposed at at least one side of the discharge assembly in a width direction of the discharge assembly; and
the battery row comprises the plurality of battery cells sequentially arranged in a length direction of the discharge assembly, each of the plurality of battery cells being configured to discharge the discharge into the discharge cavity separately.

43. The battery according to claim 42, wherein the battery row is disposed at each of two sides of the discharge assembly in the width direction.

44. The battery according to claim 42 or 43, wherein a plurality of battery rows is disposed at the at least one side of the discharge assembly in the width direction of the discharge assembly, the plurality of battery rows being sequentially arranged in a height direction of the discharge assembly.

45. The battery according to claim 44, wherein a thickness direction of the battery cell is identical to the height direction of the discharge assembly.

46. The battery according to any one of claims 41 to 45, wherein a side wall surface of the battery cell facing towards the discharge assembly is a first end face, the first end face having a pressure relief region.

47. The battery according to claim 46, wherein the battery cell has an electrical connection terminal disposed at a wall surface of the battery cell other than the first end face.

48. The battery according to claim 47, wherein:
a side wall surface of the battery cell facing away from the discharge assembly is a second end face; and
the electrical connection terminal of the battery cell is disposed at the second end face.

49. The battery according to any one of claims 41 to 48, wherein the battery cell is mounted at the discharge assembly.

50. A battery, comprising:
a discharge member having an elongated structure, the discharge member having a discharge cavity, the discharge member having an inlet region formed on each of two side wall surfaces of the discharge member in a width direction of the discharge member, and the discharge cavity being adapted to receive a discharge from a battery cell through the inlet region;
a battery row disposed at each of two sides of the discharge assembly in the width direction of the discharge member, the battery row comprising a plurality of battery cells sequentially arranged in a length direction of the discharge member, each of the plurality of battery cells having a pressure relief region at a side of the battery cell facing towards the discharge member, and each of the plurality of battery cells being disposed corresponding to one pressure relief region; and
a shield disposed in the discharge member, the shield being spaced apart from the wall surface and configured to shield the inlet region to at least block flames in the discharge, a communication channel in communication with the inlet region and the discharge cavity being formed between the shield and the wall surface to allow a gas in the discharge to enter the discharge cavity.

51. An electric device, comprising the battery according to any one of claims 41 to 50, wherein the battery is configured to supply electrical energy for the electric device.
